# EUROPÄISCHE PATENTANMELDUNG

(11) **EP 3 236 407 A1**
(43) Veröffentlichungstag der Anmeldung: **25.10.2017**
(21) Anmeldenummer: 17165339.7
(22) Anmeldetag: 06.04.2017
(51) Int. Cl.: G06Q 30/02, G06Q 30/06

(54) **VERFAHREN ZUM BEREITSTELLEN UND DIEBSTAHLGESICHERTEN AKTIVIEREN UND/ODER BELADEN VON WENIGSTENS EINER KARTE IN EINEM WARENTRÄGER, WARENTRÄGER UND VERWENDUNG DESSEN**

(30) Priorität: 06.04.2016 DE 202016002226 U; 06.06.2016 EP 16173191
(71) Anmelder: sincNOVATION GmbH, 08223 Falkenstein (DE)
(72) Erfinder: Siegel, Ralph, 01454 Wachau, OT Feldschlösschen (DE); Stiels, Jakob, 41334 Nettetal (DE)
(74) Vertreter: Grape & Schwarzensteiner

(57) **Zusammenfassung**

Die vorliegende Erfindung betrifft ein Verfahren zum Bereitstellen und diebstahlgesicherten Aktivieren und/oder Beladen von wenigstens einer/einem in einem Warenträger (10) von außen nicht manipulierbar eingebrachten Karte (12, 12'), Wertschein, Gutschein oder dergleichen Coupon mit einem beliebigen Geldwert oder geldwerten Guthaben, einen Warenträger (10) und die Verwendung des Warenträgers (10).

## Beschreibung

Die Erfindung betrifft ein Verfahren zum Bereitstellen und diebstahlgesicherten Aktivieren und/oder Beladen von wenigstens einer/einem in einem Warenträger von außen nicht manipulierbar eingebrachten Karte, Wertschein, Gutschein oder dergleichen Coupon mit einem beliebigen Geldwert oder geldwerten Guthaben, einen Warenträger und dessen Verwendung.

Karten, die mit einem beliebigen Geldwert oder geldwerten Guthaben beladen und/oder (wieder-)beladbar bzw. (wieder-)aufladbar sind, sind auf dem Gebiet der Telekommunikation als sogenannte Pre-Paid-Karten allgemein bekannt. Zur Abwicklung und Vermeidung von Diebstahl und/oder Missbrauch bei nicht ordnungsgemäßer Bezahlung des auf den Karten beladenen und/oder (wieder-)beladbaren, beliebigen Geldwertes oder geldwerten Guthabens wurden zahlreiche Verfahren vorgeschlagen. Bei vielen dieser bekannten Verfahren hat sich allerdings in der Praxis deren konstruktiver Aufwand aufgrund einer Hard- und Software erheblichen Umfangs als nachteilig erwiesen. Der konstruktive Aufwand wird oftmals durch Einbindung moderner Kommunikationsmittel, wie (mobilem) Telefon oder derartigen Endgeräten, noch zusätzlich erhöht. Ein weiterer ganz wesentlicher Nachteil von solchen Verfahren und Systemen aber besteht darin, dass diese Verfahren und Systeme zumeist auf einer vorhergehenden Authentifizierung durch einen Diensteanbieter mittels (mobilem) Telefon oder derartigen Endgeräten basieren. Eine Freischaltung und/oder Beladung der/Karte/n mit dem Geldwert oder geldwerten Guthaben setzt nämlich in der Regel eine vorherige Anmeldung und Registrierung des/der Teilnehmer/s bei dem Diensteanbieter unter Angabe von persönlichen Daten und Informationen voraus. Diese Verfahren und Systeme sind daher für Anwendungen ohne Anmeldung und Registrierung des/der Teilnehmer/s bei dem Diensteanbieter völlig ungeeignet. Ein solches Verfahren und System ist zum Beispiel in der US 6,502,745 B1 vorgeschlagen.

Gerade eine vorhergehende Authentifizierung des/der Teilnehmer/s durch einen Diensteanbieter ist für Anwendungen, die ohne Anmeldung und Registrierung des/der Teilnehmer/s erfolgen können, ausgeschlossen. Bei solchen Anwendungen handelt es sich etwa um Geschenke, Mitbringsel und "kleine Aufmerksamkeiten", wie beispielsweise Confiseriewaren oder auch Blumen, ohne hierauf abschließend beschränkt zu sein, die von einem Schenker oder Mitbringenden an einen Beschenkten bzw. Begünstigten übergeben werden.

Oft möchte der Schenker oder Mitbringende solche Geschenke, Mitbringsel und "kleine Aufmerksamkeiten" in Form eines Geldbetrages aufwerten, ohne direkt Geld zu schenken. Hier bietet sich dann ein/e Karte, Wertschein, Gutschein oder dergleichen Coupon mit einem beliebigen Geldwert oder geldwerten Guthaben an, mit welcher/welchem der Beschenkte bzw. Begünstigte sich einen Wunsch bei einem bestimmten Unternehmen, Geschäft oder Verband erfüllen kann.

Ein besonderer Effekt kann dann erzielt werden, wenn die Karte oder der Wertschein, Gutschein oder dergleichen Coupon mit einem beliebigen Geldwert oder geldwerten Guthaben für den Beschenkten bzw. Begünstigten nicht sofort erkennbar ist, also beispielsweise zusammen mit dem Geschenk, Mitbringsel und oder der "kleinen Aufmerksamkeit" in einer Umverpackung oder dergleichen aufgenommen ist. Weiter wäre es wünschenswert, wenn die/der Karte, Wertschein, Gutschein oder dergleichen Coupon vom Schenker nach individuellen Wünschen mit einem Geldwert beladen werden könnte bzw. beladbar wäre. Schließlich würde sich dem Unternehmen, Geschäft oder Verband zusätzlich die Möglichkeit bieten, den Beschenkten als potentiellen Kunden zu gewinnen.

Im Folgenden ist/sind unter dem Begriff "Karte/n" jede beliebige Art von Karte/n, Wertschein/en, Gutschein/en oder dergleichen Coupon/s bzw. Mitteln von beliebiger Art und Beschaffenheit, Abmessung, Farbe, Form, Größe, graphischer Ausgestaltung oder Material zu verstehen.

Der Erfindung liegt daher die Aufgabe zugrunde, ein Verfahren zur Verfügung zu stellen, mit welchem sich die obigen Nachteile verhindern lassen, welches mithin konstruktiv besonders einfach ist, keine vorhergehende Authentifizierung des/der Teilnehmer/s bei dem Diensteanbieter bedarf und zugleich eine ausgesprochen hohe Sicherheit gegen Diebstahl und Missbrauch, damit sehr zuverlässig und letztendlich besonders kostengünstig ist, einen entsprechend diebstahl- und missbrauchssicheren Warenträger sowie eine vorteilhafte Verwendung dieses Warenträgers bereitzustellen.

Diese Aufgabe wird in verfahrenstechnischer Hinsicht durch die Merkmale der Ansprüche 1 und 2 gelöst.

Durch die Ausgestaltung des erfindungsgemäßen Verfahrens zum Bereitstellen und diebstahlgesicherten Aktivieren und/oder Beladen bzw. Aufladen von wenigstens einer/einem in einem Warenträger von außen nicht manipulierbar eingebrachten Karte, Wertschein, Gutschein oder dergleichen Coupon mit einem beliebigen Geldwert oder geldwerten Guthaben, umfassend folgende Schritte:
a) Personalisieren der/des mindestens einen Karte, Wertscheins, Gutscheins oder dergleichen Coupons durch einen individuellen ersten Code, welcher der einen/jeder Karte, Wertschein, Gutschein oder dergleichen Coupon zugeordnet wird,
b) Personalisieren des Warenträgers durch einen individuellen zweiten Code, welcher dem Warenträger zugeordnet wird,
c) Generieren eines Datensatzes bestehend aus dem/sämtlichen ersten Codes der Karte/n, Wertschein/e, Gutschein/e oder dergleichen Coupon/s und dem zweiten Code des Warenträgers und Abspeichern des Datensatzes in einer Datenbank,
d) Zuordnen des zweiten Codes dem Warenträger, in welchen die Karte/n, Wertschein/e, Gutschein/e oder dergleichen Coupon/s eingebracht werden soll/en,
e) Einbringen der Karte/n, Wertschein/e, Gutschein/e oder dergleichen Coupon/s in den Warenträger mit dem dem Warenträger zugeordneten zweiten Code,
f) Beladen bzw. Aufladen der Karte/n, Wertschein/e, Gutschein/e oder dergleichen Coupon/s mit dem beliebigen Geldwert oder geldwerten Guthaben anhand des dem Warenträger zugeordneten zweiten Codes in dem Datensatz,
g) Abfragen des dem Warenträger zugeordneten zweiten Codes und Vergleichen des abgefragten zweiten Codes des Warenträgers mit dem zweiten Code des Warenträgers in dem Datensatz, und
h) Aktivieren der mit dem beliebigen Geldwert oder geldwerten Guthaben beladenen bzw. aufgeladenen Karte/n, Wertschein/e, Gutschein/e oder dergleichen Coupon/s, wenn die Karte/n gemäß Schritt f) beladen bzw. aufgeladen ist/sind, und/oder Beladen bzw. Aufladen der Karte/n, Wertschein/e, Gutschein/e oder dergleichen Coupon/s mit dem beliebigen Geldwert oder geldwerten Guthaben, wenn beim Vergleich der abgefragte zweite Code auf dem Warenträger und der zweite Code des Warenträgers in dem Datensatz identisch sind bzw. zusammengehören,
i) Speichern der Aktivierung und/oder Beladung bzw. Aufladung der Karte/n, Wertschein/e, Gutschein/e oder dergleichen Coupon/s unter Zuordnen des/der ersten Codes der Karte/n anhand des dem Warenträger zugeordneten zweiten Codes in dem Datensatz,
j) Abfragen und Vergleichen des der/den Karte/n, Wertschein/e, Gutschein/e oder dergleichen Coupon/s zugeordneten ersten Codes auf der/den Karte/n anhand des dem Warenträger zugeordneten zweiten Codes des Warenträgers in dem Datensatz,
k) Freigeben der Karte/n, Wertschein/e, Gutschein/e oder dergleichen Coupon/s nach Abfrage und Bestätigung der Aktivierung und/oder Beladung bzw. Aufladung der Karte/n, wenn der/die abgefragten ersten Codes der Karte/n und der zweite Code in dem Datensatz beim Vergleich einander zugeordnet bzw. zuordenbar sind bzw. zusammengehören,
wobei wenigstens einer der vorhergehenden Schritte, insbesondere einer der Schritte a) bis d) und f) bis k), durch oder mit ein/em elektronischen Speichermedium und/oder durch einen oder mit einem Computer, elektronischen Rechner oder dergleichen elektronischen Datenverarbeitungsvorrichtung durchgeführt wird,
bzw. alternativ umfassend folgende Schritte:
a) Personalisieren der/des mindestens einen Karte, Wertscheins, Gutscheins oder dergleichen Coupons durch einen individuellen Code, welcher der einen/jeder Karte, Wertschein, Gutschein oder dergleichen Coupon zugeordnet wird,
b) Generieren eines Datensatzes bestehend aus mindestens einem der Codes der Karte/n, Wertschein/e, Gutschein/e oder dergleichen Coupon/s und Abspeichern des Datensatzes in einer Datenbank,
c) Zuordnen mindestens eines der Codes dem Warenträger, in welchen die Karte/n, Wertschein/e, Gutschein/e oder dergleichen Coupon/s eingebracht werden soll/en,
d) Einbringen der Karte/n, Wertschein/e, Gutschein/e oder dergleichen Coupon/s in den Warenträger mit dem mindestens einen der dem Warenträger zugeordneten Codes,
e) Beladen bzw. Aufladen der Karte/n, Wertschein/e, Gutschein/e oder dergleichen Coupon/s mit dem beliebigen Geldwert oder geldwerten Guthaben anhand des mindestens einen der dem Warenträger zugeordneten Codes in dem Datensatz,
f) Abfragen des mindestens einen der dem Warenträger zugeordneten Codes und Vergleichen des abgefragten Codes des Warenträgers mit dem Code des Warenträgers in dem Datensatz, und
g) Aktivieren der mit dem beliebigen Geldwert oder geldwerten Guthaben beladenen bzw. aufgeladenen Karte/n, Wertschein/e, Gutschein/e oder dergleichen Coupon/s, wenn die Karte/n gemäß Schritt e) beladen bzw. aufgeladen ist/sind, und/oder Beladen bzw. Aufladen der Karte/n, Wertschein/e, Gutschein/e oder dergleichen Coupon/s mit dem beliebigen Geldwert oder geldwerten Guthaben, wenn beim Vergleich der abgefragte Code auf dem Warenträger und der Code des Warenträgers in dem Datensatz identisch sind bzw. zusammengehören,
h) Speichern der Aktivierung und/oder Beladung bzw. Aufladung der Karte/n, Wertschein/e, Gutschein/e oder dergleichen Coupon/s unter Zuordnen des/der Codes der Karte/n anhand des mindestens einen der dem Warenträger zugeordneten Codes in dem Datensatz,
i) Abfragen und Vergleichen des der/den Karte/n, Wertschein/e, Gutschein/e oder dergleichen Coupon/s zugeordneten Codes auf der/den Karte/n anhand des dem Warenträger zugeordneten Codes des Warenträgers in dem Datensatz,
j) Freigeben der Karte/n, Wertschein/e, Gutschein/e oder dergleichen Coupon/s nach Abfrage und Bestätigung der Aktivierung und/oder Beladung bzw. Aufladung der Karte/n, wenn der/die abgefragte/n Codes der Karte/n und der Code in dem Datensatz beim Vergleich einander zugeordnet bzw. zuordenbar sind bzw. zusammengehören,
wobei wenigstens einer der vorhergehenden Schritte, insbesondere einer der Schritte a) bis c) und e) bis j), durch oder mit ein/em elektronischen Speichermedium und/oder durch einen oder mit einem Computer, elektronischen Rechner oder dergleichen elektronischen Datenverarbeitungsvorrichtung durchgeführt wird,
lassen sich erfindungsgemäße Verfahren erhalten, die sich grundsätzlich dadurch auszeichnen, dass die/der wenigstens eine mit einem beliebigen Geldwert oder geldwerten Guthaben beladene/aufgeladene und/oder beladbare/aufladbare Karte, Wertschein, Gutschein oder dergleichen Coupon selbst in dem Warenträger aufgenommen ist. Zudem sind die erfindungsgemäßen Verfahren konstruktiv besonders einfach ausgestaltet. Insbesondere erfordern die erfindungsgemäßen Verfahren keine vorhergehende Authentifizierung des/der Teilnehmer/s bei dem Diensteanbieter. Weiterhin schützen die erfindungsgemäßen Verfahren ausgesprochen zuverlässig gegen Diebstahl und Missbrauch, weisen mithin eine ausgesprochen hohe Sicherheit im Allgemeinen und gute Diebstahlsicherung im Besonderen auf. Damit einhergehend zeichnen sich die erfindungsgemäßen Verfahren durch eine große Zuverlässigkeit aus und sind letztendlich - nicht zuletzt hieraus resultierend - besonders kostengünstig. Ersteres Verfahren ist besonders dann zu bevorzugen, wenn der Warenträger und/oder dessen Umverpackung nicht transparent bzw. durchsichtig ausgebildet ist/sind. Letzteres Verfahren eignet sich besonders, wenn der Warenträger und/oder dessen Umverpackung transparent oder teilweise transparent bzw. durchsichtig ausgestaltet ist, beispielsweise ein Sichtfenster aufweist, durch welches der mindestens eine der Codes der Karte/n oder der individuelle erste Code oder der individuelle zweite Code von außen sichtbar ist/sind, ohne dass der Warenträger manipuliert wird/werden muss. Durch bzw. mittels Verwendung und/oder Einsatz/es eines Computer/s, elektronischen Rechner/s oder dergleichen elektronischen Datenverarbeitungsvorrichtung lässt/ lassen sich auf bevorzugte Weise ein oder mehrere der Schritte der erfindungsgemäßen Verfahren und damit der erfindungsgemäßen Verfahren insgesamt automatisieren.

Weitere vorteilhafte Einzelheiten der erfindungsgemäßen Verfahren sind in den Ansprüchen 3 bis 20 beschrieben.

Bevorzugterweise wird die mindestens eine Karte nach Anspruch 3 zusätzlich durch eine dem individuellen ersten Code oder individuellen Code zugeordnete Nummer aus bereitgestellten Pools von Nummern personalisiert. Die Nummern sind/können dabei zusätzlich in vorteilhafter Weise durch Zufallsprinzip gemischt sein/werden. Diese zusätzliche Personalisierung der Karte/n bringt die zusätzliche Sicherheit mit sich, dass eine systematische Reihenfolge der Karte/n und/oder Warenträger für Unbefugte, Kunden und Mitarbeiter nicht erkennbar ist, ohne den/die Warenträger zu manipulieren und insoweit zu beschädigen, um an die Karte/n selbst zu gelangen. Auf diese Weise, durch die eine sogenannte zufällige Würfelung der Karte/n und/oder Warenträger ermöglicht ist, ist ein gezielter Missbrauch vollends ausgeschlossen.

Entsprechend den Merkmalen des Anspruchs 4 wird/werden der individuelle erste Code oder individuelle Code der/den Karte/n und/oder der individuelle zweite Code dem Warenträger analog oder digital zugeordnet.

Der individuelle Code oder individuelle erste Code wird nach Anspruch 5 vorzugsweise mit der jeweiligen Karte unlösbar verbunden. Insbesondere kann der individuelle erste Code oder individuelle Code auf die jeweilige Karte, vorzugsweise mittels diverser Personalisierungsverfahren bzw. Klebstoff und/oder Druck, angeheftet, aufgebracht oder aufgetragen werden.

Um einerseits die Karte/n gegen äußere Kontaminierungen zu schützen und andererseits eine Abgabe von irgendwelchen, gegebenenfalls gesundheitsbeeinträchtigenden oder sogar gesundheitsschädlichen, chemischen Stoffen, Farb- oder Druckstoffen etc. von der/den Karte/n an deren Umgebung zuverlässig zu vermeiden, sind die Maßnahmen des Anspruchs 6 vorgesehen. Demnach wird/werden die/mehrere/sämtliche Karte/n in eine, insbesondere teilweise oder vollständig durchsichtige, Umverpackung oder dergleichen Folie eingebracht. Mit anderen Worten wird/werden die Karten, beispielsweise durch Einschweißen oder dergleichen in die Umverpackung bzw. Folie, isoliert, etwa von zum Beispiel einer lebensmittelbestückten Umgebung.

Zu diesem Zweck sind die Merkmale des Anspruchs 7 von besonderem Vorteil. Demnach wird/werden die/mehrere/sämtliche Karte/n in eine lebensmittelunbedenkliche Umverpackung oder dergleichen Folie eingebracht.

Zur Separierung oder Vereinzelung von jeweils zueinander benachbarten bzw. gehörenden Karten im Verlaufe des weiteren erfindungsgemäßen Verfahrens und damit zur zusätzlichen Vereinfachung von dessen Handhabung wird/werden die/mehrere/sämtliche Karte/n nach Anspruch 8 in eine Umverpackung oder dergleichen Folie mit einer Perforation zwischen jeweils zueinander benachbarten bzw. gehörenden Karten eingebracht. Dies vereinfacht den Verfahrensablauf bis zum Bestücken des/der Warenträger mit der/den Karte/n erheblich, ohne die Gefahr, dass einzelne Karten zwischenzeitlichen versehentlich oder durch gezielte äußere Manipulationen verlorengehen. Zudem lässt hierdurch auch die Sicherheit gegen Diebstahl und Missbrauch erhöhen.

Von besonderem Interesse sind weiterhin die Maßnahmen des Anspruchs 9, wonach der individuelle zweite Code der/den Karte/n oder einer Umverpackung oder dergleichen Folie der Karte/n oder einer gemeinsamen Umverpackung oder dergleichen Folie mehrerer oder sämtlicher Karten lösbar zugeordnet wird.

In diesem Zusammenhang erweisen sich die Merkmale des Anspruchs 10 als besonders zweckmäßig. So wird der individuelle zweite Code an der/den Karte/n oder einer Umverpackung oder dergleichen Folie der Karte/n oder einer gemeinsamen Umverpackung oder dergleichen Folie mehrerer oder sämtlicher Karten durch ein Sandwich-Etikett oder dergleichen Trägerelement, insbesondere mittels Klebstoff, lösbar befestigt.

In alternativer Ausgestaltung der Erfindung ist es ebenso denkbar, den individuellen zweiten Code gemäß Anspruch 11 der/den Karte/n oder einer Umverpackung oder dergleichen Folie der Karte/n oder einer gemeinsamen Umverpackung oder dergleichen Folie mehrerer oder sämtlicher Karten unlösbar zuzuordnen.

Dabei kann der individuelle zweite Code entsprechend Anspruch 12 zweckmäßigerweise mit der/den Karte/n oder einer Umverpackung oder dergleichen Folie der Karte/n oder einer gemeinsamen Umverpackung oder dergleichen Folie mehrerer oder sämtlicher Karten unlösbar verbunden, insbesondere auf der/den Karte/n oder einer Umverpackung oder dergleichen Folie der Karte/n oder einer gemeinsamen Umverpackung oder dergleichen Folie mehrerer oder sämtlicher Karten, vorzugsweise mittels Klebstoff und/oder Druck, in einem von einem Sichtfenster des Warenträgers freigegebenen Bereich von außen sichtbar angeheftet, aufgebracht oder aufgetragen werden.

Von besonderem Interesse sind weiterhin die Maßnahmen des Anspruchs 13, wonach der Datensatz bestehend aus mindestens einem der Codes der Karte/n und dem zweiten Code des Warenträgers oder bestehend aus dem/sämtlichen ersten Codes der Karte/n durch Scannen erfasst und generiert wird, und/oder dass der dem Warenträger zugeordnete zweite Code oder der mindestens eine der dem Warenträger zugeordneten Codes durch Scannen abgefragt wird, und/oder dass erste Code auf der/den Karte/n oder der der/den Karte/n zugeordnete Code durch Scannen abgefragt wird.

Die Merkmale des Anspruchs 14, dass nämlich der individuelle zweite Code des Warenträgers von der/den Karte/n oder einer Umverpackung oder dergleichen Folie der Karte/n oder einer gemeinsamen Umverpackung oder dergleichen Folie mehrerer oder sämtlicher der Karten gelöst und dem Warenträger zugeordnet, insbesondere auf den Warenträger, vorzugsweise mittels Klebstoff, angeheftet, aufgebracht oder aufgetragen wird, vereinfacht das erfindungsgemäße Verfahren noch zusätzlich. Zum einen lässt sich eine einfache und schnelle Um- bzw. Übertragung des individuellen zweiten Codes vornehmen. Zum anderen sind besondere konstruktive Vorkehrungen, wie etwa ein Sichtfenster im Warenträger vorzusehen, nicht notwendig. Beides wirkt sich vorteilhaft auf den Herstellungs- und Kostenaufwand aus.

Gemäß Anspruch 15 wird/werden die Karte oder bei Vorhandensein von zwei oder mehreren Karten nach gegenseitiger Separierung, vorzugsweise durch eine Perforation, voneinander einzeln in den Warenträger mit dem individuellen zweiten Code eingebracht. Zweckmäßigerweise lassen sich auf diese Weise zwei oder mehrere Karten gemeinsam aufbereiten und quasi als Einheit handhaben, in den Warenträger aber zur Steigerung des Überraschungseffektes getrennt voneinander einbringen.

Darüber hinaus liegt es im Rahmen der Erfindung, dass die Karte/n entsprechend den Merkmalen des Anspruchs 16 bei ordnungsgemäßem Erwerb des Warenträgers durch entsprechenden Eintrag in dem generierten Datensatz anhand des/der dem Warenträger mindestens einen zugeordneten individuellen ersten oder individuellen Codes oder anhand des dem Warenträger zugeordneten zweiten Codes aktiviert und/oder mit dem beliebigen Geldwert oder geldwerten Guthaben beladen wird/werden.

In diesem Zusammenhang ist erfindungsgemäß vorgesehen, die Aktivierung und/oder Beladung der Karte/n mit dem beliebigen Geldwert oder geldwerten Guthaben nach Anspruch 17 durch Scannen einzuleiten.

Vorteilhafterweise wird der Geldwert oder das geldwerte Guthaben, welcher/welches der/den Karte/n in beliebiger Höhe zugewiesen ist, gemäß Anspruch 18 nach Identifizierung und/oder Aktivierung und/oder Beladung der Karte/n eingelöst und/oder verrechnet und bei fehlender Identifizierung und/oder Aktivierung und/oder Beladung der Karte/n verweigert.

Um den Schutz gegen Diebstahl und Missbrauch noch zusätzlich zu erhöhen, ist es denkbar, bei versuchtem Einlösen und/oder Verrechnen des der/den Karte/n beliebigen Geldwertes oder geldwerten Guthabens ohne Aktivierung und/oder Beladung der Karte/n entsprechend den Merkmalen des Anspruchs 19 einen Notruf zu generieren und zu einem privaten Sicherheitsdienst und/oder der Polizei zu senden. Generierung und Sendung beispielsweise eines Notruf(signal)s oder einer Information können dabei vollends automatisch erfolgen. Alternativ oder kumulativ ist es ebenso möglich, den Notruf unmittelbar an diejenige Stelle des Unternehmens, Geschäftes oder Verbandes bzw. Kunden bzw. der Firma, welche die Karten herausgibt, zu versenden.

Schließlich wird/werden der erste individuelle oder individuelle Code und/oder der individuelle zweite Code nach Anspruch 20 als eindimensionaler oder zweidimensionaler Code, insbesondere Barcode, ausgebildet.

Darüber hinaus wird diese Aufgabe in vorrichtungstechnischer Hinsicht durch die Merkmale des Anspruchs 21 gelöst.

Durch die Ausgestaltung des erfindungsgemäßen Warenträgers, umfassend wenigstens eine/n Karte, Wertschein, Gutschein oder dergleichen Coupon, welche/r in dem Warenträger von außen nicht manipulierbar eingebracht ist, mit einem beliebigen Geldwert oder geldwerten Guthaben beladen oder beladbar ist, anhand mindestens eines der wenigstens einen Karte individuell zugeordneten Codes oder individuellen ersten Codes oder anhand eines dem Warenträger zugeordneten individuellen zweiten Codes zugeordnet ist, diebstahlgesichert aktivierbar und/oder mit dem beliebigen Geldwert oder geldwerten Guthaben beladbar ist, lässt sich ein Warenträger erhalten, der konstruktiv besonders einfach ausgestaltet und ausgesprochen zuverlässig ist. Weiterhin ist der erfindungsgemäße Warenträger vielseitig und von Jedermann verwendbar, ohne dass eine vorhergehende Authentifizierung des/der Teilnehmer/s bei einem Diensteanbieter erforderlich ist. Darüber hinaus ist der Warenträger und damit einhergehend die/der wenigstens eine Karte, Wertschein, Gutschein oder dergleichen Coupon ausgesprochen zuverlässig gegen Diebstahl und Missbrauch geschützt. Der Warenträger nach der Erfindung und die/der wenigstens eine Karte, Wertschein, Gutschein oder dergleichen Coupon besitzen mithin eine ausgesprochen hohe Sicherheit. Aufgrund der einfachen, zugleich zuverlässigen konstruktiven Ausbildung einerseits und einer ausgesprochen wirksamen Diebstahlsicherung bzw. einem sehr hohen Schutz gegen Diebstahl und Missbrauch andererseits lassen sich erhebliche Kosteneinsparungen mit dem erfindungsgemäßen Warenträger erreichen.

Weitere vorteilhafte Einzelheiten des erfindungsgemäßen Warenträgers sind in den Ansprüchen 22 bis 32 beschrieben.

In zweckmäßiger Weise ist die wenigstens eine Karte nach Anspruch 22 nicht sichtbar eingebracht. Wenn die Karte/n von dem Warenträger von außen nicht sichtbar aufgenommen ist/sind, wird der Überraschungseffekt wesentlich erhöht. Zugleich sinkt die Gefahr von Missbrauch und Diebstahl. Alternativ dazu kann die wenigstens eine Karte in den Warenträger ebenso vollständig oder teilweise von außen sichtbar eingebracht sein. Sofern die Karte/n derart angeordnet ist/sind, entfällt zwar der Überraschungseffekt, vereinfacht sich andererseits das erfindungsgemäße Verfahren in seinem Ablauf.

Von besonderem Interesse sind weiterhin die Maßnahmen des Anspruchs 23. Danach umfasst der Warenträger neben der/dem wenigstens einen Karte, Wertschein, Gutschein oder dergleichen Coupon mindestens eine Ware oder mehrere Waren gleicher oder unterschiedlicher Art, insbesondere Pralinen, anderes Konfekt oder Süßigkeiten, Spielwaren, Spielzeug, Kosmetika oder dergleichen.

Weiterhin liegt es im Rahmen der Erfindung, dass der Warenträger nach Anspruch 24 eine Umverpackung umfasst, in welcher die wenigstens eine Karte ohne oder mit der mindestens einen Ware unmittelbar oder mittelbar über eine Sortiereinlage bzw. einen Blister, eine Einlage zur Unterteilung, ein separates Fach oder ein gesondertes Aufnahmeelement, etwa als Teil der Sortiereinlage bzw. des Blisters oder als Tasche eines Deckels, mit oder ohne Polsterkissen zur Abstützung, eine beweg- oder verschwenkbare Trägermimik beim Betätigen des Warenträgers aufklappt oder senkrecht (auf-)stellt (Pop-Up-Effekt), aufgenommen ist/sind.

Von ganz besonderem Vorteil sind die Merkmale des Anspruchs 25, wonach der Warenträger als Ware selbst, Geschenkartikel oder Geschenkbox ausgebildet ist, in welcher die wenigstens eine Karte ohne oder mit der mindestens einen Ware unmittelbar oder mittelbar über eine Sortiereinlage bzw. einen Blister, eine Einlage zur Unterteilung, ein separates Fach oder ein gesondertes Aufnahmeelement, etwa als Teil der Sortiereinlage bzw. des Blisters oder als Tasche eines Deckels, mit oder ohne Polsterkissen zur Abstützung, eine beweg- oder verschwenkbare Trägermimik beim Betätigen des Warenträgers aufklappt oder senkrecht (auf-)stellt (Pop-Up-Effekt), aufgenommen ist/sind.

Nach Anspruch 26 ist der Warenträger bevorzugt als Confiserieware, insbesondere als Präsentfigur aus Schokolade, Krokant oder (gefärbtem) Zuckerguss oder Mischungen daraus, ausgebildet, in welcher die wenigstens eine Karte ohne oder mit der mindestens einen Ware, insbesondere Pralinen, anderes Konfekt oder Süßigkeiten, Spielwaren, Spielzeug, Kosmetika oder dergleichen aufgenommen ist/sind.

Vorzugsweise ist die Präsentfigur entsprechend Anspruch 27 aus zwei Hälften gebildet, die miteinander einen Hohlraum einschließen. Gemäß der vorliegenden Erfindung ist die/der wenigstens eine Karte, also die Geschenkkarte, Wertschein, Gutschein oder dergleichen Coupon, in dem Hohlraum aufgenommen, ohne dass diese/r für den Beschenkten zunächst erkennbar ist. Hierdurch lässt sich der Überraschungseffekt steigern.

In ganz vorteilhafter Weise ist die Präsentfigur nach Anspruch 28 in einer an die Form der Präsentfigur angepasste Kunststoffeinlage aufgenommen bzw. gehalten. Diese Kunststoffeinlage dient gleichzeitig als Schutz für die Präsentfigur vor Druck und Stoß und kann somit eine Beschädigung oder einen Zerstörung der Präsentfigur vermeiden.

Alternativ umfasst der Warenträger nach Anspruch 29 vorzugsweise eine Beigabe, etwa in Form von Blumen oder eines Blumenstraußes, an welcher der Warenträger befestigbar ist.

Weiter ist erfindungsgemäß vorgesehen, dass der Warenträger nach Anspruch 30 eine symmetrische oder asymmetrische Form, oder eine dreidimensionale geometrische Form, insbesondere einer Kugel, eines Tetraeders, eines Rechtecks, eines Würfels, oder sonstigen Polygons aufweist. Vorzugsweise besitzt der Warenträger oder die Präsentfigur jedoch die Form eines Balles, insbesondere eines Fußballes oder Tennisballes, eines Mondes oder eines Sterns, eines Eies, eines Tieres, insbesondere eines Maikäfers, eines Marienkäfers, eines Hasen, eines Lamms, einer Kuh, einer Ente, eines Nikolaus oder eines Weihnachtsmanns, und ist somit speziell als Beigabe für Geschenke zu den Hauptfesten des Kirchenjahres geeignet. Der Warenträger bzw. die Präsentfigur kann so jede beliebige Form annehmen. In besonders vorteilhafter Ausgestaltung kann der Warenträger auch als Kalender, insbesondere Weihnachtskalender, ausgebildet sein, mit der Möglichkeit, darin mehrere Karten, Wertscheine, Gutscheine oder dergleichen Coupons, zum Beispiel zu Nikolaus oder Weihnachten, vorzusehen.

Darüber hinaus ist dem Warenträger nach Anspruch 31 außenseitig ein individueller erster Code oder individueller Code oder ein individueller zweiter Code zur Personalisierung und zum Abgleich personalisierter Elemente zugeordnet, welcher scannbar und welcher der/dem mit einem beliebigen Geldwert oder geldwerten Guthaben beladenen oder beladbaren Karte, Wertschein, Gutschein oder dergleichen Coupon zugeordnet bzw. zuordenbar ist.

In alternativer Ausbildung dazu ist dem Warenträger entsprechend den Maßnahmen nach Anspruch 32 bevorzugterweise an geeigneter Stelle ein individueller erster Code oder individueller Code oder ein individueller zweiter Code zur Personalisierung und zum Abgleich personalisierter Elemente zugeordnet, welcher durch ein in der Umverpackung angeordnetes Sichtfenster scannbar und welcher der/dem mit einem beliebigen Geldwert oder geldwerten Guthaben beladenen oder beladbaren Karte, Wertschein, Gutschein oder dergleichen Coupon zugeordnet bzw. zuordenbar ist.

Des Weiteren ist/sind der erfindungsgemäße Warenträger und/oder die Karte/n nach Anspruch 33 als Werbeträger, Werbeprodukt, Geschenkartikel, Geschenkbox oder sonstigen Eye-Catcher zur Anziehung und Steigerung der Aufmerksamkeit von Personen auf ein/an einem den Warenträger ausgebenden Unternehmen ausgebildet.

Diese Aufgabe wird schließlich noch in verwendungsmäßiger Hinsicht durch die Merkmale des Anspruchs 34 gelöst.

Demnach ist der erfindungsgemäße Warenträger als Werbeträger, Werbeprodukt, Geschenkartikel, Geschenkbox oder sonstigen Eye-Catcher zur Anziehung und Steigerung der Aufmerksamkeit von Personen auf ein/an einem den Warenträger ausgebenden Unternehmen vorgesehen.

Weitere Merkmale, Vorteile und Einzelheiten der Erfindung ergeben sich aus der nachfolgenden Beschreibung von einigen bevorzugten Ausführungsformen der Erfindung sowie anhand der Zeichnungen. Hierbei zeigen:
- Fig. 1: ein Ablaufdiagramm einer Ausführungsform eines erfindungsgemäßen Verfahrens zum Bereitstellen und diebstahlgesicherten Aktivieren und/oder Beladen von wenigstens einer/einem in einem Warenträger von außen nicht manipulierbar eingebrachten Karte, Wertschein, Gutschein oder dergleichen Coupon mit einem beliebigen Geldwert oder geldwerten Guthaben,
- Fig. 2: eine schematische Darstellung der Ausführungsform des erfindungsgemäßen Verfahrens entsprechend der Fig. 1,
- Fig. 3: eine schematische Darstellung der Ausführungsform des erfindungsgemäßen Verfahrens entsprechend den Fig. 1 und 2 im Falle einer Akzeptanz bzw. Freigabe,
- Fig. 4: eine schematische Darstellung der Ausführungsform des erfindungsgemäßen Verfahrens entsprechend den Fig. 1 und 2 im Falle einer Ablehnung,
- Fig. 5: ein Ablaufdiagramm einer weiteren Ausführungsform eines erfindungsgemäßen Verfahrens entsprechend der Fig. 1,
- Fig. 6: eine schematische Darstellung der Ausführungsform des erfindungsgemäßen Verfahrens entsprechend der Fig. 5,
- Fig. 7: eine schematische Darstellung der Ausführungsform des erfindungsgemäßen Verfahrens entsprechend den Fig. 5 und 6 im Falle einer Akzeptanz bzw. Freigabe, und
- Fig. 8: eine schematische Darstellung der Ausführungsform des erfindungsgemäßen Verfahrens entsprechend den Fig. 5 und 6 im Falle einer Ablehnung.

Bei der nachfolgenden Beschreibung von verschiedenen Ausführungsformen eines erfindungsgemäß ausgebildeten Warenträgers 10 sind einander entsprechende, gleiche Bauteile jeweils mit identischen Bezugsziffern versehen. Gleiches gilt für die verschiedenen Ausführungsformen des Verfahrens nach der Erfindung.

Der Warenträger 10 nach der Erfindung ist als Werbeträger, Werbeprodukt, Geschenkartikel oder Geschenkbox vorgesehen. Insbesondere eignet sich der erfindungsgemäße Warenträger 10 zur Verwendung als Eye-Catcher zur Anziehung und Steigerung der Aufmerksamkeit von Personen auf ein/an einem den Warenträger ausgebenden Unternehmen.

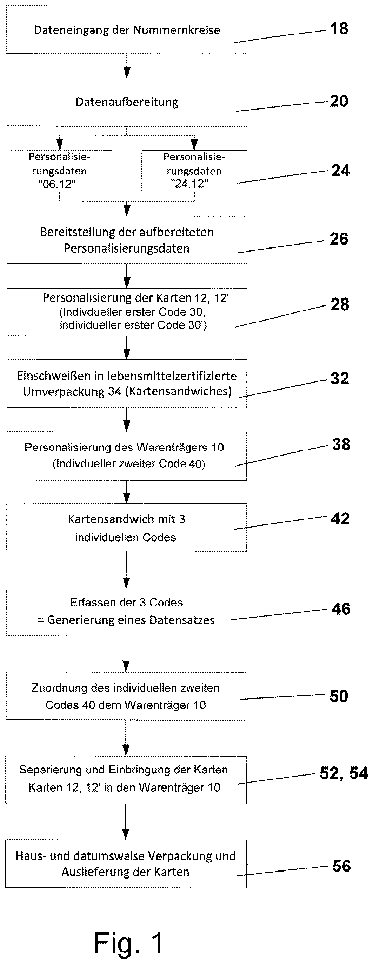

Bei der Ausführungsform des erfindungsgemäßen Verfahrens, das anhand der Fig. 1 bis 4 dargestellt und beschrieben ist, ist der Warenträger 10 als Adventskalender ausgestaltet und nimmt wenigstens eine/n Karte 12, 12', Wertschein, Gutschein oder dergleichen Coupon auf, welche/welcher mit einem beliebigen Geldwert oder geldwerten Guthaben beladen bzw. aufgeladen oder beladbar bzw. aufladbar ist/sind.

Bei der Ausführungsform des Warenträgers 10 der Fig. 1 bis 4 sind zwei Karten 12, 12', Wertscheine, Gutscheine oder dergleichen Coupons eingebracht bzw. einzubringen.

Die zwei Karten 12, 12' sind in dem Warenträger 10 von außen nicht sichtbar angeordnet, nachdem es sich bei dem Warenträgers 10 um einen Adventskalender handelt. Der Warenträger 10 umfasst zu diesem Zweck eine Umverpackung 14, zum Beispiel aus eine Schachtel aus Pappkarton, und ist mit einem beliebigen Adventskalendermotiv versehen bzw. überzogen oder bedruckt ist. Der Warenträger 10 ist somit undurchsichtig ausgebildet, wodurch der Überraschungseffekt erheblich gesteigert werden kann, da für den Beschenkten bzw. Begünstigten nicht erkennbar ist, ob der Warenträger 10 überhaupt mit einer/einem Karte 12, 12', Wertschein, Gutschein oder dergleichen Coupon und - wenn ja - in welcher Anzahl ausgestattet ist.

Neben den zwei Karten 12, 12' umfasst der Warenträger 10 mindestens eine Ware oder mehrere Waren gleicher oder unterschiedlicher Art (nicht dargestellt). In aller Regel sind in Adventskalendern insbesondere Pralinen, anderes Konfekt oder Süßigkeiten, Spielwaren, Spielzeug, Kosmetika oder dergleichen enthalten, die sich in Form, Aussehen und Größe zumeist auch zueinander unterscheiden können. Ohne im Einzelnen darauf beschränkt zu sein, ist es selbstverständlich möglich, dazu auch andere Waren, zum Beispiel nicht-essbare Kleinigkeiten und Überraschungen, kumulativ oder alternativ vorzusehen.

Um die zwei Karten 12, 12' und die Waren in dem Warenträger 10 in vorbestimmter und nicht veränderbarer (An-)Ordnung zu halten, umfasst der Warenträger 10 weiterhin eine Sortiereinlage 16 bzw. einen Blister. Die Sortiereinlage 16, die an die Umverpackung 14 angepasst und von dieser aufnehmbar ist, besteht beispielsweise aus gepresstem Karton oder Kunststoff und weist vorliegend 24 Unterteilungen für jedes der 24 zu öffnenden Türchen auf. Die zwei Karten 12, 12' und die Waren sind daher in der Umverpackung 14 des Warenträgers 10 mittelbar gehalten. Die zwei Karten 12, 12' sind für die beiden Türchen des Warenträgers vom 6. und 24. Dezember bestimmt. Die Karte 12 ist dabei dem 6. Dezember zugeordnet und mit "06.12" gekennzeichnet. Die Karte 12' ist dabei dem 24. Dezember zugeordnet und mit "24.12" gekennzeichnet. Die Waren aus Schokolade und sonstigen nicht-essbare Kleinigkeiten und Überraschungen sind den verbleibenden Türchen zugeordnet.

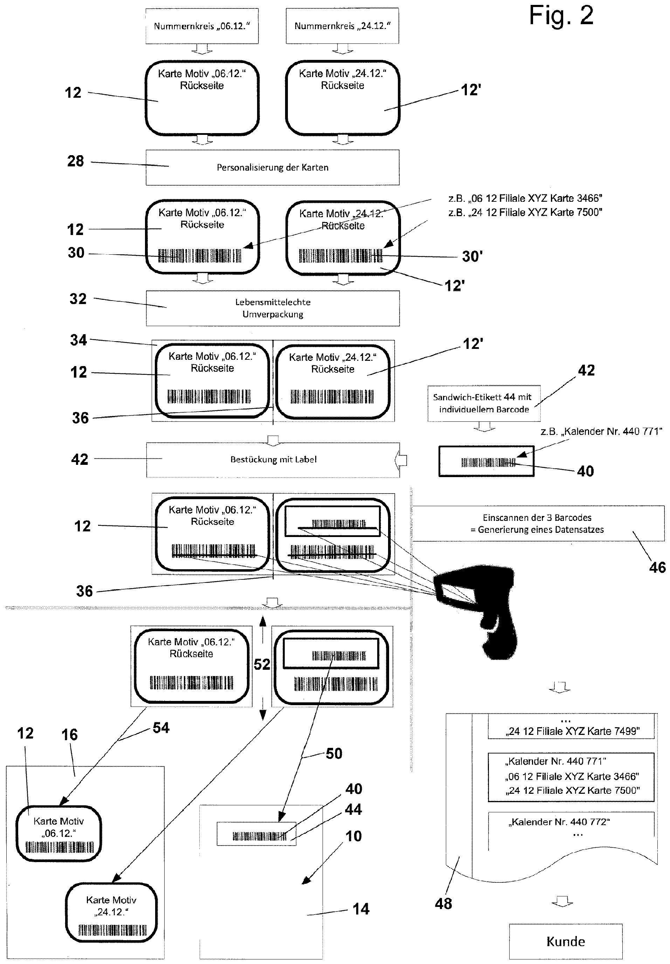

Eine bevorzugte Ausführungsform des Verfahrens nach der Erfindung, das dem Bereitstellen und diebstahlgesicherten Aktivieren und/oder Beladen bzw. Aufladen von wenigstens einer/einem Karte 12, 12', Wertschein, Gutschein oder dergleichen Coupon, die/der in dem Warenträger 10 von außen nicht manipulierbar eingebracht ist/sind, mit einem beliebigen Geldwert oder geldwerten Guthaben dient, ist nachfolgend anhand der Fig. 1 bis 4 näher erläutert:
Wie insbesondere aus den Fig. 1 und 2 hervorgeht, werden zu Beginn in Schritt 18 Pools bzw. Kreise von Nummern bereitgestellt, welcher jeder der Karten 12, 12' nachfolgend zugeordnet wird. Bei der dargestellten Ausführungsform sind zwei Pools bzw. Nummernkreise "06.12" und "24.12" vorgesehen. Für die unterschiedlichen Pools bzw. Nummernkreise werden Karten 12, 12' mit unterschiedlichen Motiven "06.12" und 24.12" zueinander auf Vorder- und Rückseite ausgewählt.

In Schritt 20 werden sämtliche Daten, mit welchen die Karten 12, 12' personalisiert bzw. individualisiert werden sollen, zusammengestellt und aufbereitet. Dazu gehören zum Beispiel die Pools bzw. Nummernkreise "06.12", "24.12", der Kunde bzw. die Firma, welche/r die Karten 12, 12' herausgibt, deren Standort, die Filiale "XYZ" der Firma, in welcher die Karte/n eingelöst werden können, und eine Kartennummer "3466", "7500".

In Schritt 24 werden die Daten den Karten 12, 12' als Personalisierungsdaten individuell zugeordnet.

In Schritt 26 werden die aufbereiteten Personalisierungsdaten sodann zum Abruf bzw. zur Weiterverarbeitung bereitgestellt.

Am Ende von Schritt 26 liegen die Personalisierungsdaten der zwei Karten 12, 12' vorzugsweise in Form eines eindimensionalen oder zweidimensionalen Codes, insbesondere Barcodes, vor.

In Schritt 28 werden sodann die zwei Karten 12, 12' jeweils durch einen individuellen ersten Code 30, 30' personalisiert, welcher den Karten 12, 12' zugeordnet wird. Die Zuordnung erfolgt bevorzugt dadurch, dass der individuelle erste Code 30, 30' mit der jeweiligen Karte 12, 12' unlösbar verbunden wird. Zu diesem Zweck wird der jeweilige, individuelle erste Code 30, 30' bevorzugt auf die jeweilige Karte 12, 12' mittels Klebstoff und/oder Druck angeheftet, aufgebracht oder aufgetragen.

In Schritt 32 werden die zwei Karten 12, 12' im Anschluss daran in eine, insbesondere teilweise oder vollständig durchsichtige, Umverpackung 34 oder dergleichen Folie eingebracht. Bei der Umverpackung 34 handelt es sich um lebensmittelunbedenkliche Umverpackung oder dergleichen Folie, wie sie marktüblich erhältlich ist. Die Umverpackung 34 ist bevorzugt zertifiziert. Die Umverpackung 34 dient einer Trennung zw. Isolierung von den zwei Karten 12, 12' und den insbesondere essbaren Waren, um jede gegenseitige Kontaminierung zu vermeiden. Darüber hinaus ermöglicht die Umverpackung 34 eine Optimierung des erfindungsgemäßen Verfahrens aufgrund einer vereinfachten, d.h. zusammengefassten Handhabung der Karten 12, 12' im folgenden Ablauf dar. Zugleich stellt die Umverpackung 34 eine zusätzliche Sicherheit gegen Missbrauch und Diebstahl der einzelnen Karten 12, 12' dar, die zu einem Art Kartenverbund bzw. Kartensandwich zusammengefasst sind.

Um die zwei zueinander benachbarten Karten 12, 12' nachfolgend, was noch erläutert wird, voneinander separieren bzw. vereinzeln zu können, ist die Umverpackung 34 oder dergleichen Folie in zweckmäßiger Weise mit einer Perforation 36 versehen. Die spätere Separierung der zwei Karten 12, 12' lässt sich auf diese Weise sehr einfach, schnell und ohne Aufwand sowie vor allem ohne Beschädigung der Karten 12, 12' selbst bewerkstelligen.

Anschließend erfolgt in Schritt 38 eine Personalisierung des Warenträgers 10 durch einen individuellen zweiten Code 40, welcher dem Warenträger 10 selbst zugeordnet wird. Der individuell zweiten Code 40 liegt vorzugsweise ebenfalls in Form eines eindimensionalen oder zweidimensionalen Codes, insbesondere Barcodes, vor. Der Code 40 kann beispielsweise eine Nummer, wie "Kalender Nr. 4440 771", enthalten.

Bei der vorliegenden Ausführungsform wird zu diesem Zweck der individuelle zweite Code 40, welcher dem Warenträger zugeordnet wird, in Schritt 42 der gemeinsamen Umverpackung 34 der zwei Karten 12, 12' lösbar zugeordnet. Ohne im Einzelnen dargestellt zu sein, ist es jedoch ebenso denkbar, den individuellen zweiten Code 40 den zwei Karten 12, 12' oder einer Umverpackung der zwei Karten 12, 12', wenn diese gegebenenfalls von vornherein bereits getrennt voneinander vorliegen sollten, lösbar zuzuordnen.

Zur Bestückung der Umverpackung 34 in Schritt 42 wird der individuelle zweite Code 40 des Warenträgers 10 an der gemeinsamen Umverpackung 34 der zwei Karten 12, 12' über ein Sandwich-Etikett 44 oder dergleichen Trägerelement, insbesondere mittels Klebstoff, lösbar befestigt. Damit ist quasi ein sogenanntes Kartensandwich mit den drei individuellen Codes, nämlich den zwei individuellen ersten Codes 30, 30' der zwei Karten 12, 12' und des individuellen zweiten Codes 40 des Warenträgers 10, gebildet.

In Schritt 46 wird ein Datensatz bestehend aus sämtlichen ersten Codes 30, 30' der zwei Karten 12, 12' und des individuellen zweiten Codes 40 des Warenträgers 10 generiert und erfasst. Die Erfassung erfolgt dabei durch (Ein-)Scannen der drei Barcodes. Der Datensatz wird in einer Datenbank 48 gespeichert. Die Datenbank 48 kann auf einem gesonderten Datenträger, wie Datenspeichermedium, zum Beispiel einem USB-Stick oder einer Compact Disk, der üblicherweise mit einem Computer, elektronischen Rechner oder dergleichen elektronischen Datenverarbeitungsvorrichtung zusammenwirkt. Ebenso kann die Datenbank 48 unmittelbar auf einem Computer, elektronischen Rechner oder dergleichen elektronischen Datenverarbeitungsvorrichtung gespeichert werden.

In Schritt 50 wird dem Warenträger 10, in welchen die zwei Karten 12, 12' eingebracht werden sollen, daraufhin der individuelle zweite Codes 40 zugeordnet. Die Zuordnung erfolgt physisch, vorzugsweise mittels Klebstoff oder dergleichen. Zu diesem Zweck wird das Sandwich-Etikett 44 oder dergleichen Trägerelement mit den drei individuellen ersten und zweiten Codes 30, 30', 40 von der Umverpackung 34 abgenommen und an/auf einen aus dem Lager bereitgestellten Warenträger, vorzugsweise auf dessen Rückseite, angeheftet, aufgebracht oder aufgetragen bzw. aufgeklebt. Ein aus dem Lager bereitgestellter Warenträger wird somit physisch zu dem personalisierten Warenträger 10.

In Schritt 52 werden die zwei Karten 12, 12' voneinander separiert bzw. vereinzelt, indem die Umverpackung 34 an deren vorgesehener Perforierung 36 geteilt wird.

Nach gegenseitiger Separierung voneinander werden die zwei Karten 12, 12' dann in Schritt 54 einzeln in den Warenträger 10 mit dem individuellen zweiten Code 40, welcher dem Warenträger 10 zugeordnet und über das Sandwich-Etikett 44 auf dessen Rückseite aufgeklebt ist, eingebracht bzw. eingelegt.

In Schritt 56 wird der so bereitgestellte Warenträger 10 versandfertig verpackt und an den Kunden bzw. die Firma, welche/r die Karten 12, 12' herausgibt, zusammen mit der Datenbank 48 (aus-)geliefert. Die Datenbank 48 kann dabei durch Übergabe des gesonderten Datenträgers, wie Datenspeichermediums, zum Beispiel einem USB-Sticks oder einer Compact Disk, oder des Computers, elektronischen Rechners oder dergleichen elektronischen Datenverarbeitungsvorrichtung, auf welcher die Datenbank 48 abgespeichert ist, erfolgen. Ebenso möglich ist ein Überspielen oder Herauf- bzw. Herunterladen der Datenbank 48 auf einen externen, gesonderten Computer, elektronischen Rechner oder dergleichen elektronischen Datenverarbeitungsvorrichtung beim Kunden bzw. der Firma.

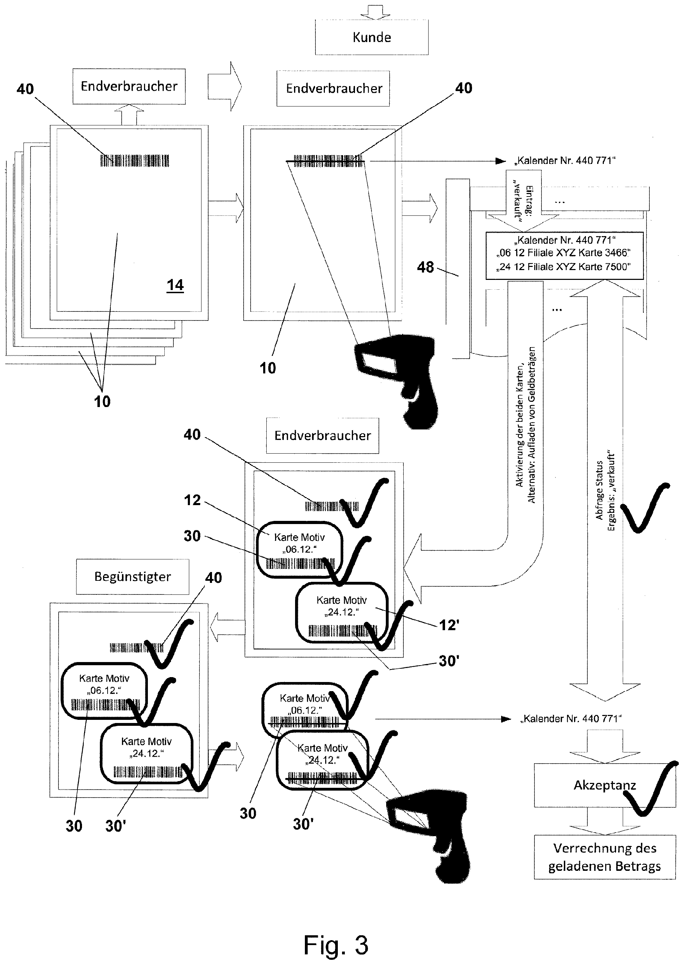

Entsprechend der Fig. 3 wird der Warenträger 10 zusammen mit weiteren Warenträger einer Charge von dem Kunden bzw. der Firma an Endverbraucher zum Verkauf angeboten.

Dabei besteht die eine Möglichkeit, nur eine der zwei Karten 12, 12' oder beide Karten 12, 12' schon zu diesem Zeitpunkt mit dem beliebigen Geldwert oder geldwerten Guthaben anhand des dem Warenträger 10 zugeordneten zweiten Codes 40 in dem Datensatz, wie in der Datenbank 48 abgelegt, zu beladen bzw. aufzuladen. Der beladene bzw. aufgeladene Geldwert oder geldwerten Guthaben wird in den Datensatz korrelierend zu dem individuellen zweiten Code 40 eingeschrieben. Die Beladung bzw. Aufladung kann rechnergestützt erfolgen.

Bei Kauf des Warenträgers wird der individuelle zweite Code 40, der über das Sandwich-Etikett 44 auf der Rückseite des Warenträgers aufgeklebt ist, abgefragt. Die Abfrage kann ebenfalls durch (Ein-)Scannen vorgenommen werden.

Anschließend werden der abgefragte zweite Code 40 des Warenträgers 10 und der zweite Code 40 des Warenträgers 10, der in dem Datensatz gespeichert ist, miteinander verglichen.

Wenn bei dem Vergleich der abgefragte zweite Code 40 auf dem Warenträger 10 und der zweite Code 40 des Warenträgers 10 in dem Datensatz identisch sind bzw. zusammengehören, wird/werden die Karte/n 12, 12', die bereits zuvor mit dem beliebigen Geldwert oder geldwerten Guthaben beladen bzw. aufgeladen wurde/n, entsprechend aktiviert.

Wenn dagegen bis zu diesem Zeitpunkt noch keine Beladung bzw. Aufladung auch nur einer einzigen der Karten 12, 12' stattgefunden hat, besteht alternativ auch erfindungsgemäß die weitere Möglichkeit, die noch nicht beladene/n Karte/n 12, 12' nunmehr mit dem beliebigen Geldwert oder geldwerten Guthaben zu beladen.

Aktivierung und Beladung bzw. Aufladung werden unter Zuordnen der ersten Codes 30, 30' der Karten 12, 12' anhand des dem Warenträger 10 zugeordneten zweiten Codes 40 in dem Datensatz in der Datenbank 48 vermerkt und gespeichert. Die Aktivierung und Beladung bzw. Aufladung kann rechnergestützt erfolgen.

Der Endverbraucher, welcher den Warenträger 10 gekauft und somit rechtmäßig bzw. ordnungsgemäß erworben hat, kann den Warenträger 10 mit den darin eingebrachten zwei Karten 12, 12' an den Beschenkten bzw. Begünstigten weitergeben.

Dieser wiederum kann die Karten 12, 12' dem Warenträger 10 entnehmen und den/das entsprechende/n zugewiesene/n Geldwert oder geldwerten Guthaben bei dem Kunden bzw. der Firma, welche/r die Karten 12, 12' herausgibt, einlösen und/oder verrechnen lassen. Ein Mitbringen oder Vorlegen des Warenträgers 10 oder der Rechnung ist dazu nicht erforderlich.

Zum Einlösen bzw. Verrechnen(-lassen) des Geldwertes oder geldwerten Guthabens ist vielmehr nur die Vorlage der zwei Karten 12, 12' notwendig. Die individuellen ersten Codes 30, 30' auf den zwei Karten 12, 12' werden abgefragt. Auch diese Abfrage kann durch (Ein-)Scannen durchgeführt werden.

Anschließend werden die individuellen ersten Codes 30, 30' auf den zwei Karten 12, 12' anhand des dem Warenträger 10 zugeordneten zweiten Codes 40 des Warenträgers 10, der in dem Datensatz der Datenbank 48 abgelegt ist, verglichen. Der Vergleich kann gleichermaßen direkt mit den dem Warenträger 10 zugeordneten ersten Codes 30, 30' des Warenträgers 10, die in dem Datensatz der Datenbank 48 abgelegt sind, durchgeführt werden. Der Vergleich erfolgt rechnergestützt. Die Korrelation ergibt sich zwangsläufig durch die Generierung des Datensatzes in Schritt 46.

Wenn die abgefragten ersten Codes 30, 30' der Karten 12, 12' und der zweite Code 40 oder, wie schon zuvor ausgeführt, die individuellen ersten Codes 30, 30' der zwei Karten 12, 12' in dem Datensatz der Datenbank 48 beim rechnergstützten Vergleich einander zugeordnet bzw. zuordenbar sind, d.h. aufgefunden werden können und miteinander übereinstimmen, werden die Karten 12, 12' akzeptiert bzw. freigegeben. Akzeptierung bzw. Freigabe erfolgen vorzugsweise ebenfalls computergestützt. Der Geldwert oder das geldwerte Guthaben wird an den Beschenkten bzw. Begünstigten ausbezahlt bzw. entsprechend verrechnet.

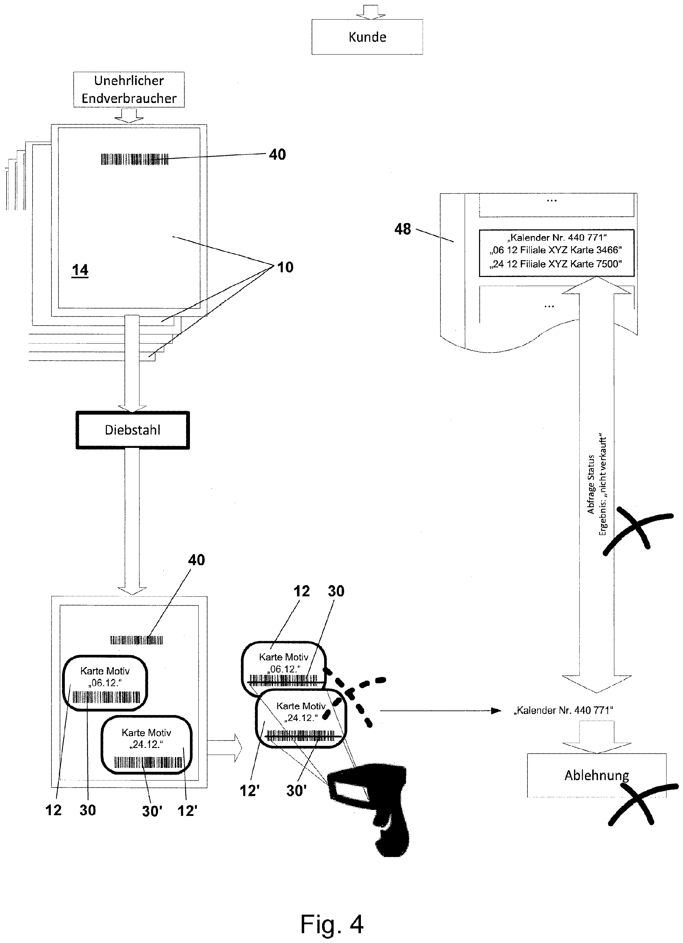

Wie schließlich aus der Fig. 4 ersichtlich ist, fehlt es andernfalls, d.h. beispielsweise bei nicht rechtmäßigem Erwerb und Diebstahl des Warenträgers 10, an einer fehlenden Aktivierung und/oder Beladung bzw. Aufladung der zwei Karten 12, 12'. Die Einlösung und/oder Verrechnung des auf den zwei Karten 12, 12' zugewiesenen Geldwertes oder geldwerten Guthabens wird verweigert.

Zur Prävention von Missbrauch oder Diebstahl kann es in diesem Zusammenhang besonders wirkungsvoll sein, dass bei versuchtem Einlösen der Karten 12, 12' und/oder Verrechnen des Geldwertes oder geldwerten Guthabens ohne Aktivierung und/oder Beladung der Karten 12, 12' ein Notruf generiert und zu einem privaten Sicherheitsdienst und/oder der Polizei gesendet wird. Generierung und Sendung beispielsweise eines Notruf(signal)s oder einer Information können dabei vollends automatisch erfolgen. Alternativ oder kumulativ ist es ebenso möglich, den Notruf unmittelbar an diejenige Stelle des Unternehmens, Geschäftes oder Verbandes bzw. Kunden bzw. der Firma, welche die Karten herausgibt, zu versenden.

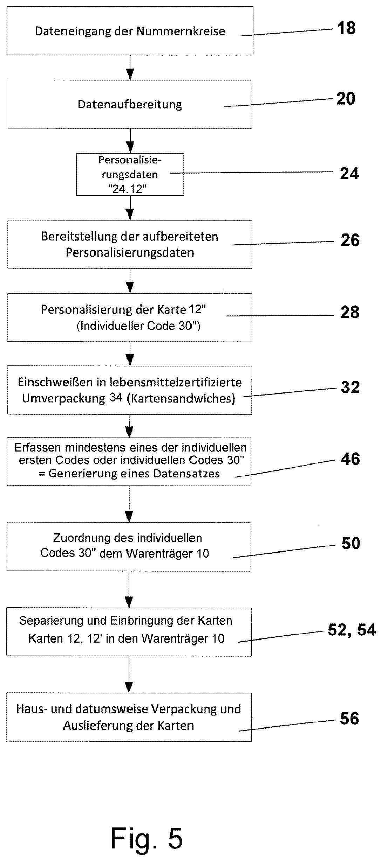

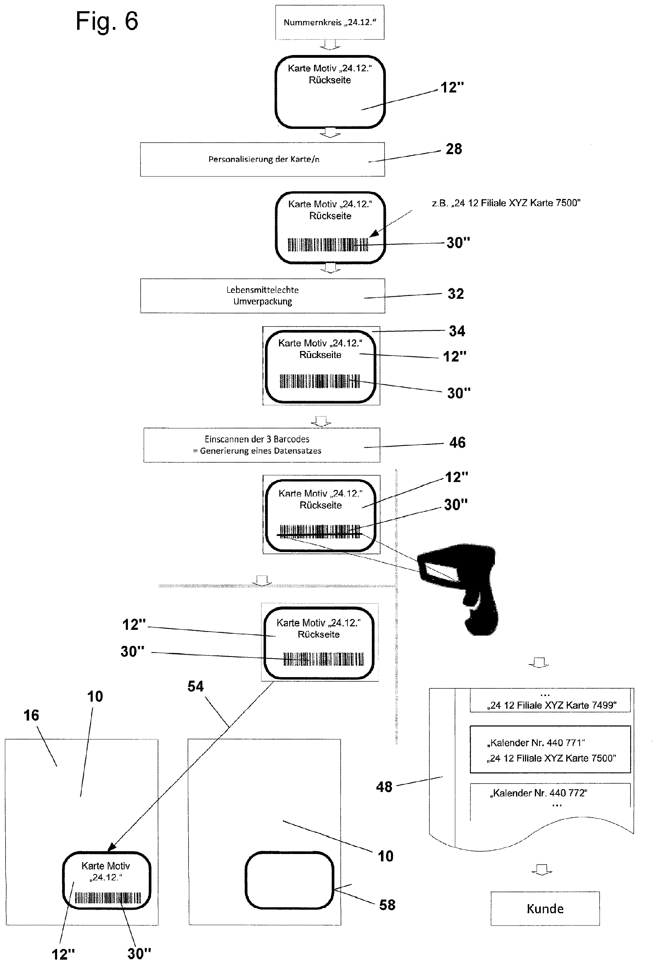

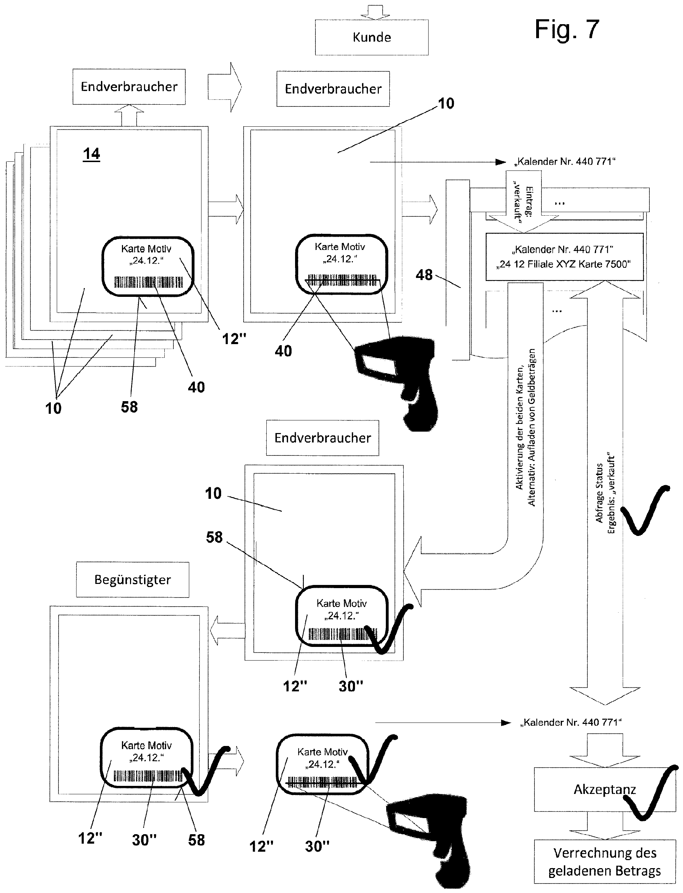

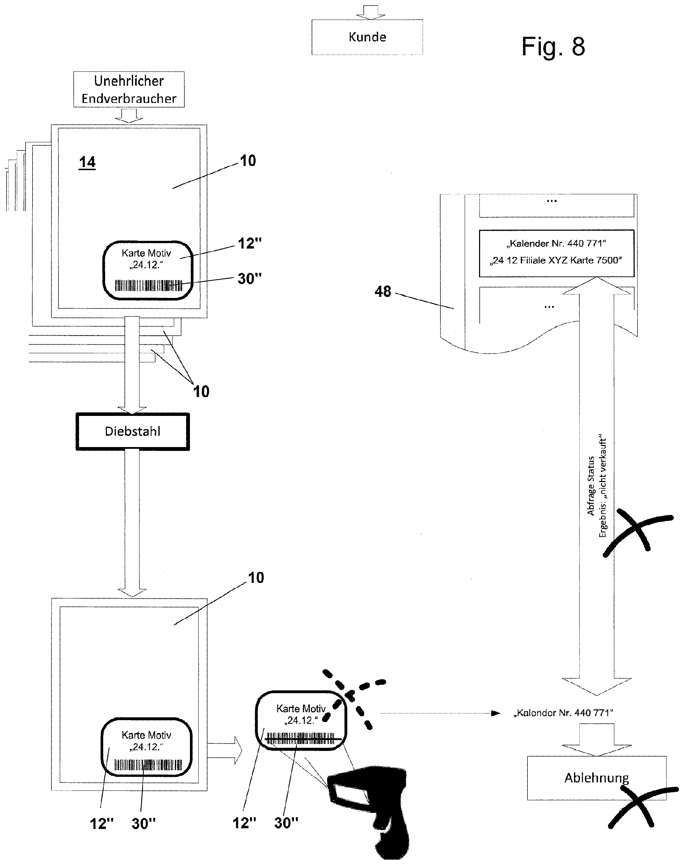

Eine andere bevorzugte Ausführungsform des Verfahrens nach der Erfindung ist nachfolgend anhand der Fig. 5 bis 8 näher erläutert:
Bei der Ausführungsform des erfindungsgemäßen Verfahrens, das anhand der Fig. 5 bis 8 dargestellt und beschrieben ist, ist der Warenträger 10 ebenfalls als Adventskalender ausgestaltet.

Im Unterschied zu der Ausführungsform des erfindungsgemäßen Verfahrens der Fig. 1 bis 4 ist in den Warenträger 10 jedoch nur eine Karte 12'' eingebracht bzw. einzubringen und mit einem beliebigen Geldwert oder geldwerten Guthaben zu beladen bzw. aufzuladen.

Weitere Unterschiede bei der Ausführungsform des Warenträgers 10 der Fig. 5 bis 8 gegenüber der Ausführungsform desjenigen der Fig. 1 bis 4 sind Folgende:
Die wenigstens eine Karte 12'' ist in den Warenträger 10 von außen vollständig oder teilweise sichtbar eingebracht. Mithin lässt/lassen sich ein oder mehrere individuelle Codes 30'' der Karte/n 12'' durch die Umverpackung 14, die beispielsweise aus Cellophanfolie gebildet sein kann, wahrnehmen.

Dem Warenträger 10 ist an geeigneter Stelle ein individueller Code 30'' zur Personalisierung und zum Abgleich personalisierter Elemente zugeordnet ist, welcher durch ein in der Umverpackung 14' angeordnetes Sichtfenster 58 scannbar und welcher der/dem mit einem beliebigen Geldwert oder geldwerten Guthaben beladenen oder beladbaren Karte 12", Wertschein, Gutschein oder dergleichen Coupon zugeordnet bzw. zuordenbar ist

Die mindestens eine Karte 12" wird in Schritt 28 durch einen individuellen Code 30'', welcher der mindestens einen Karte 12'' zugeordnet wird, personalisiert. Sind mehrere Karten 12'' vorhanden, wird aus deren individuellen Codes 30'' einer zur Personalisierung ausgewählt.

In Schritt 46 wird ein Datensatz generiert, der aus mindestens einem der Codes 30'' der Karte/n 12'' besteht. Mithin wird auf auf eine Personalisierung des Warenträgers 10 durch einen gesonderten, individuellen zweiten Code 40, wie bei der Ausführungsform des erfindungsgemäßen Verfahrens nach den Fig. 1 bis 4, verzichtet. Dies ist vor allem dadurch ermöglicht, dass der Warenträger 10 bzw. dessen Umverpackung 14' zumindest teilweise durchsichtig ausgebildet ist.

In Schritten 50 wird der mindestens eine der Codes 30" dem Warenträger 10, in welchen die Karte 12" eingebracht werden soll, zugeordnet.

In Schritt 52 wird die Karte 12" in den Warenträger 10 mit dem mindestens einen der dem Warenträger 10 zugeordneten Codes 30'' eingelegt.

Die weiteren Schritte stimmen schließlich wieder mit den entsprechenden Schritten, die im Zusammenhang mit der Ausführungsform des erfindungsgemäßen Verfahrens der Fig. 1 bis 4 beschrieben sind, überein, mit der Ausnahme, dass der mindestens eine Code 30'' in dem Datensatz der Datenbank 48, welcher zuvor ausgewählt wurde und dem Warenträger 10 zugeordnet ist, an die Stelle des individuellen zweiten Codes 40 tritt.

Die Erfindung ist nicht auf die beschriebenen Ausführungsformen des erfindungsgemäßen Warenträgers 10 beschränkt. So ist es ohne weiteres möglich, die verschiedenen Ausführungsformen des erfindungsgemäßen Warenträgers 10 untereinander bzw. miteinander beliebig zu kombinieren. Gleiches gilt für das erfindungsgemäße Verfahren. Ebenso ist das Verfahren nach der Erfindung nicht auf Verfahren zum Bereitstellen und diebstahlgesicherten Aktivieren etc. von einer oder zwei Karte/n entsprechend den vorstehenden Ausführungsformen beschränkt. Vielmehr lässt sich das erfindungsgemäße Verfahren entsprechend und ohne weiteres auf jede beliebige Anzahl von Karten 12, 12' anwenden. Des Weiteren ist es möglich, dass der individuelle zweite Code 40 mit den Karten 12, 12' oder einer Umverpackung der Karten oder einer gemeinsamen Umverpackung 34 der zwei oder mehrerer Karten nicht lösbar, sondern unlösbar verbunden, insbesondere auf der/den Karte/n oder einer Umverpackung oder dergleichen Folie der Karte/n oder einer gemeinsamen Umverpackung oder dergleichen Folie mehrerer oder sämtlicher Karten, vorzugsweise mittels Klebstoff und/oder Druck, in einem von einem Sichtfenster des Warenträgers freigegebenen Bereich von außen sichtbar angeheftet, aufgebracht oder aufgetragen wird. Auch kann/können der individuelle Code 30'' oder individuelle erste Code 30 der Karten 12, 12' und/oder der individuelle zweite Code 40 dem Warenträger 10 analog oder digital zugeordnet werden.

Ohne im Einzelnen dargestellt zu sein, kann der Warenträger 10 darüber hinaus eine Umverpackung 14 umfassen, in welcher die wenigstens eine Karte 12, 12', 12'' ohne oder mit der mindestens einen Ware unmittelbar oder mittelbar über eine Einlage zur Unterteilung, ein separates Fach oder ein gesondertes Aufnahmeelement, etwa als Teil der Sortiereinlage 16 oder als Tasche eines Deckels, mit oder ohne Polsterkissen zur Abstützung, eine beweg- oder verschwenkbare Trägermimik beim Betätigen des Warenträgers 10 aufklappt oder senkrecht (auf-)stellt (Pop-Up-Effekt), aufgenommen ist/sind.

Zudem ist es möglich, dass der Warenträger 10 als Ware selbst, Geschenkartikel oder Geschenkbox ausgebildet ist, in welcher die wenigstens eine Karte 12, 12, 12" ohne oder mit der mindestens einen Ware unmittelbar oder mittelbar über eine Sortiereinlage 16, eine Einlage zur Unterteilung, ein separates Fach oder ein gesondertes Aufnahmeelement, etwa als Teil der Sortiereinlage 16 oder als Tasche eines Deckels, mit oder ohne Polsterkissen zur Abstützung, eine beweg- oder verschwenkbare Trägermimik beim Betätigen des Warenträgers 10 aufklappt oder senkrecht (auf-)stellt (Pop-Up-Effekt), aufgenommen ist/sind.

Weiterhin kann der Warenträger 10 eine Beigabe (nicht dargestellt), etwa in Form von Blumen oder eines Blumenstraußes, umfassen, an welcher der Warenträger 10 selbst befestigbar ist/sind.

Der Warenträger 10 kann darüber hinaus jede beliebige Form annehmen, wie etwa eine symmetrische oder asymmetrische Form, eine dreidimensionale geometrische Form, insbesondere einer Kugel, eines Tetraeders, eines Rechtecks, eines Würfels, oder sonstigen Polygons, die Form eines Balles, insbesondere eines Fußballes oder Tennisballes, eines Mondes oder eines Sterns, eines Eies, eines Tieres, insbesondere eines Maikäfers, eines Marienkäfers, eines Hasen, eines Lamms, einer Kuh, einer Ente, eines Nikolaus oder eines Weihnachtsmanns, oder als Kalender, insbesondere Weihnachtskalender, ausgebildet sein.

Vorzugsweise ist die mindestens eine Ware oder Beigabe also ein Geschenkartikel, der üblicherweise als kleine Aufmerksamkeit bezeichnet wird, wie Pralinen, anderes Konfekt oder Süßigkeiten, Spielwaren, Spielzeug, Kosmetika oder dergleichen sowie Blumen oder ein Blumenstrauß. Der Geschenkartikel muss selbst nicht allzu hochpreisig sein, kann sich aber durchaus schon in einem höherpreisigen Bereich bewegen. Der Geschenkartikel soll mehr als persönliche Aufwertung der/des Karte 12, 12', 12'', Wertscheins, Gutschein oder dergleichen Coupons mit einem beliebigen Geldwert oder geldwerten Guthaben dienen. Theoretisch könnte es sich dabei also auch um einen Scherzartikel handeln.

Vorzugsweise ist der Warenträger 10 als Geschenkartikel ausgestaltet, der Confiseriewaren aufweist. Dabei lässt sich der Warenträger 10 insbesondere als Präsentfigur aus Schokolade, Krokant oder (gefärbtem) Zuckerguss oder Mischungen daraus, ausbilden, in welcher die wenigstens eine Karte 12, 12', 12" und/oder die mindestens eine Ware, insbesondere Pralinen, anderes Konfekt oder Süßigkeiten, Spielwaren, Spielzeug, Kosmetika etc., aufgenommen ist/sind.

In geeigneter Weise können in dem Hohlraum zusätzlich Pralinen, anderes Konfekt oder Süßigkeiten aufgenommen sein. Hier kann man sich vorstellen, dass die Pralinen, das Konfekt oder die Süßigkeiten, die Spielwaren, das Spielzeug, die Kosmetika oder dergleichen, in einer Hälfte und die/der Karte 12, 12', 12'', Wertschein, Gutschein oder dergleichen Coupon in der anderen Hälfte des Hohlraumes aufgenommen sind.

In vorteilhafter Weise kann die Präsentfigur in einer an die Form der Präsentfigur angepasste Einlage, zum Beispiel aus Kunststoff, Papier, Pappe oder anderen Werkstoffen sowie kombinationen daraus, aufgenommen sein. Eine solche Einlage kann auch ein separates Fach zur Aufnahme von weiteren Pralinen, anderem Konfekt oder Süßigkeiten, Spielwaren, Spielzeug, Kosmetika oder dergleichen, aufweisen.

In einer weiteren, ebenso bevorzugten Ausführungsform kann der Warenträger 10 in Form einer Geschenkbox mit Süßigkeiten, wie Schokolade, Pralinen oder Konfekt, Spielwaren, Spielzeug, Kosmetika oder dergleichen, und einer in der Geschenkbox integrierten, mit der/dem Geldwert beladbaren Karte 12, 12', 12'', Wertschein, Gutschein oder dergleichen Coupon angeboten werden.

In der Geschenkbox, in welcher die Süßigkeiten in üblicher Weise, beispielsweise mittels Sortiereinlage 16, gehalten sind, ist zusätzlich ein Aufnahmeelement für die/den Karte 12, 12', 12", Wertschein, Gutschein oder dergleichen Coupon vorgesehen. Dieses Aufnahmeelement kann Bestandteil oder Teil der Sortiereinlage 16 sein, in welchem vorzugsweise Süßigkeiten, wie Schokolade, Pralinen oder Konfekt, aber auch Spielwaren, Spielzeug, Kosmetika, etc., gehalten werden.

Das Aufnahmeelement kann in geeigneter Weise auch im Deckel der Geschenkbox angeordnet sein, beispielsweise in Form eines Steckfaches oder einer Tasche.

Bei einer besonders bevorzugten Ausgestaltung einer solchen Geschenkbox ist die/der Karte 12, 12', 12'', Wertschein, Gutschein oder dergleichen Coupon in einem gesonderten, mit dem Deckel in funktioneller Verbindung stehendem Träger angeordnet. Diese Ausführungsform zeichnet sich insbesondere dadurch aus, dass das Aufnahmeelement derart mit dem Deckel der Geschenkbox verbunden ist, dass es sich beim Öffnen zusammen mit der/dem Karte 12, 12', 12'', Wertschein, Gutschein oder dergleichen Coupon mit einem Pop-Up-Effekt erhebt und senkrecht stellt und so dem Beschenkten präsentiert wird.

Die vorliegende Erfindung zeichnet sich nicht zuletzt dadurch aus, dass dem Warenträger 10 an geeigneter Stelle ein Barcode zugeordnet ist, welcher der Personalisierung und dem Abgleich personalisierter Elemente dient und mit Hilfe dessen die/der Karte 12, 12', 12'', Wertschein, Gutschein oder dergleichen Coupon von außen mit einem individuellen Geldbetrag indirekt aufladbar ist.

Dazu sind die mit einem Geldwert aufladbaren Karten 12, 12', 12'', Wertscheine, Gutscheine oder dergleichen Coupons mit einem ersten Barcode 30, 30', 30" ausgestattet, der Auskunft über den Geschäftsbetrieb (Firma und Standort), in dem die Karte/n 12, 12', 12'' eingelöst werden kann/können, gibt und eine Kartennummer beinhaltet.

Dieser Barcode 30, 30', 30'' korrespondiert mit einem zweiten Barcode 40, der auf einem Sicherheitsetikett bzw. Sandwich-Etikett 44 aufgebracht ist. Das Sicherheitsetikett wird auf bzw. an dem Warenträger 10 derart angebracht, dass es von außen zugängig ist und gescannt werden kann.

Bei der Geschenkbox kann das die Schachtel selbst sein. Bei der Präsentfigur wird das Sicherheitsetikett beispielsweise auf die Metallfolie, die als lebensmittelunbedenkliche Umverpackung 14 der Präsentfigur dient, angebracht und ein Sichtfenster 58 in der Umverpackung 14 aus beispielsweise Karton angeordnet, durch welches der Barcode gescannt werden kann. Gegebenenfalls kann diese Umverpackung 14 auch nur aus einer dekorativen und durchsichtigen Cellophanhülle bestehen.

Die Daten des Barcodes auf der/dem Karte 12, 12', 12", Wertschein, Gutschein oder dergleichen Coupon und dem Sicherheitsetikett sind in einer Datenbank 48 eines Computers, elektronischen Rechners oder dergleichen elektronischen Datenverarbeitungsvorrichtung hinterlegt, wodurch der Zusammenhang mit dem auf der/dem Karte 12, 12', 12'', Wertschein, Gutschein oder dergleichen Coupon aufgeladenen Geldwert hergestellt wird.

Die Karten 12, 12', 12", Wertscheine, Gutscheine oder dergleichen Coupons sind mit verschiedenen Motiven ausstattbar, beispielsweise den Logos oder Schriftzügen derjenigen Unternehmen, bei denen sie eingelöst werden können. Zusätzlich können Motive beinhaltet sein, die Auskunft über den Anlass des Geschenks geben, wie Weihnachten, Ostern oder sonstige vorhersehbare kalendarische Anlässe.

Die Verbindung aus Geschenk (Warenträger 10 in Form der beschriebenen Präsentfigur oder der Geschenkbox mit Süßigkeiten, Spielwaren, Spielzeug, Kosmetika oder dergleichen), insbesondere in Form von Süßigkeiten in einer attraktiven Umverpackung 14, mit einer/einem individuell aufladbaren geldwerten Karte 12, 12', 12'', Wertschein, Gutschein oder dergleichen Coupon bewirkt, dass die/der Karte 12, 12', 12'', Wertschein, Gutschein oder dergleichen Coupon mehr als sonst als höherwertiges Geschenk wahrgenommen wird. Ein solches Medium kann deutlich die wahrgenommene Qualität des Produkts bzw. Warenträgers 10 beim Käufer und Beschenkten steigern. Das Produkt wird auch zu einer höheren Aufladung der Karte 12, 12', 12" führen, was letztendlich von Interesse für das Unternehmen ist, bei dem die Karte 12, 12', 12'' eingelöst werden kann.

Die Erfindung bzw. das/die erfindungsgemäßen/n Verfahren und Warenträger ist/sind nicht auf die dargestellten Ausführungsformen beschränkt. Ohne im Einzelnen dargestellt oder beschrieben zu sein, kann/können sämtliche vorgeschlagenen oder beschriebenen Schritte und/oder Maßnahmen ohne weiteres und in üblicher Weise durch oder mit oder unter Zuhilfenahme oder in Zusammenwirkung mit ein/em elektronischen Speichermedium und/oder durch oder mit oder unter Zuhilfenahme oder in Zusammenwirkung mit einen/einem Computer, elektronischen Rechner oder dergleichen elektronischen Datenverarbeitungsvorrichtung durchgeführt werden. Durch bzw. mittels Verwendung und/oder Einsatz/es eines Computer/s, elektronischen Rechner/s oder dergleichen elektronischen Datenverarbeitungsvorrichtung lässt/lassen sich auf bevorzugte Weise ein oder mehrere der Schritte und/oder Maßnahmen der erfindungsgemäßen Verfahren und damit der erfindungsgemäßen Verfahren insgesamt automatisieren bzw. automatisch oder automatisiert handhaben.

## Patentansprüche

1. Verfahren zum Bereitstellen und diebstahlgesicherten Aktivieren und/oder Beladen von wenigstens einer/einem in einem Warenträger (10) von außen nicht manipulierbar eingebrachten Karte (12, 12'), Wertschein, Gutschein oder dergleichen Coupon mit einem beliebigen Geldwert oder geldwerten Guthaben, umfassend folgende Schritte:
a) Personalisieren der/des mindestens einen Karte (12, 12'), Wertscheins, Gutscheins oder dergleichen Coupons durch einen individuellen ersten Code (30, 30'), welcher der einen/jeder Karte (12, 12'), Wertschein, Gutschein oder dergleichen Coupon zugeordnet wird,
b) Personalisieren des Warenträgers (10) durch einen individuellen zweiten Code (40), welcher dem Warenträger (10) zugeordnet wird,
c) Generieren eines Datensatzes bestehend aus dem/sämtlichen ersten Codes (30, 30') der Karte/n (12, 12'), Wertschein/e, Gutschein/e oder dergleichen Coupon/s und dem zweiten Code (40) des Warenträgers (10) und Abspeichern des Datensatzes in einer Datenbank (48),
d) Zuordnen des zweiten Codes (40) dem Warenträger (10), in welchen die Karte/n (12, 12'), Wertschein/e, Gutschein/e oder dergleichen Coupon/s eingebracht werden soll/en,
e) Einbringen der Karte/n (12, 12'), Wertschein/e, Gutschein/e oder dergleichen Coupon/s in den Warenträger (10) mit dem dem Warenträger (10) zugeordneten zweiten Code (40),
f) Beladen der Karte/n (12, 12'), Wertschein/e, Gutschein/e oder dergleichen Coupon/s mit dem beliebigen Geldwert oder geldwerten Guthaben anhand des dem Warenträger (10) zugeordneten zweiten Codes (40) in dem Datensatz,
g) Abfragen des dem Warenträger (10) zugeordneten zweiten Codes (40) und Vergleichen des abgefragten zweiten Codes (40) des Warenträgers (10) mit dem zweiten Code (40) des Warenträgers (10) in dem Datensatz, und
h) Aktivieren der mit dem beliebigen Geldwert oder geldwerten Guthaben beladenen Karte/n (12, 12'), Wertschein/e, Gutschein/e oder dergleichen Coupon/s, wenn die Karte/n (12, 12') gemäß Schritt f) beladen ist/sind, und/oder Beladen der Karte/n (12, 12'), Wertschein/e, Gutschein/e oder dergleichen Coupon/s mit dem beliebigen Geldwert oder geldwerten Guthaben, wenn beim Vergleich der abgefragte zweite Code (40) auf dem Warenträger (10) und der zweite Code (40) des Warenträgers (10) in dem Datensatz identisch sind oder zusammengehören,
i) Speichern der Aktivierung und/oder Beladung der Karte/n (12, 12'), Wertschein/e, Gutschein/e oder dergleichen Coupon/s unter Zuordnen des/der ersten Codes (30, 30') der Karte/n (12, 12') anhand des dem Warenträger (10) zugeordneten zweiten Codes (40) in dem Datensatz,
j) Abfragen und Vergleichen des der/den Karte/n (12, 12'), Wertschein/e, Gutschein/e oder dergleichen Coupon/s zugeordneten ersten Codes (30, 30') auf der/den Karte/n (12, 12') anhand des dem Warenträger (10) zugeordneten zweiten Codes (40) des Warenträgers (10) in dem Datensatz,
k) Freigeben der Karte/n (12, 12'), Wertschein/e, Gutschein/e oder dergleichen Coupon/s nach Abfrage und Bestätigung der Aktivierung und/oder Beladung der Karte/n (12, 12'), wenn der/die abgefragten ersten Codes (30, 30') der Karte/n (12, 12') und der zweite Code (40) in dem Datensatz beim Vergleich einander zugeordnet bzw. zuordenbar sind oder zusammengehören,
wobei wenigstens einer der vorhergehenden Schritte, insbesondere einer der Schritte a) bis d) und f) bis k), durch oder mit ein/em elektronischen Speichermedium und/oder durch einen oder mit einem Computer, elektronischen Rechner oder dergleichen elektronischen Datenverarbeitungsvorrichtung durchgeführt wird.

2. Verfahren zum Bereitstellen und diebstahlgesicherten Aktivieren und/oder Beladen von wenigstens einer/einem in einem Warenträger (10) von außen nicht manipulierbar eingebrachten Karte (12''), Wertschein, Gutschein oder dergleichen Coupon mit einem beliebigen Geldwert oder geldwerten Guthaben, umfassend folgende Schritte:
a) Personalisieren der mindestens einen Karte (12"), Wertschein, Gutschein oder dergleichen Coupon durch einen individuellen Code (30''), welcher der einen/jeder Karte (12"), Wertschein, Gutschein oder dergleichen Coupon zugeordnet wird,
b) Generieren eines Datensatzes bestehend aus mindestens einem der Codes (30") der Karte/n (12"), Wertschein/e, Gutschein/e oder dergleichen Coupon/s und Abspeichern des Datensatzes in einer Datenbank (48),
c) Zuordnen mindestens eines der Codes dem Warenträger (10), in welchen die Karte/n (12"), Wertschein/e, Gutschein/e oder dergleichen Coupon/s eingebracht werden soll/en,
d) Einbringen der Karte/n (12"), Wertschein/e, Gutschein/e oder dergleichen Coupon/s in den Warenträger (10) mit dem mindestens einen der dem Warenträger (10) zugeordneten Codes (30"),
e) Beladen der Karte/n (12''), Wertschein/e, Gutschein/e oder dergleichen Coupon/s mit dem beliebigen Geldwert oder geldwerten Guthaben anhand des mindestens einen der dem Warenträger (10) zugeordneten Codes (30'') in dem Datensatz,
f) Abfragen des mindestens einen der dem Warenträger (10) zugeordneten Codes (30") und Vergleichen des abgefragten Codes (30") des Warenträgers (10) mit dem Code (30") des Warenträgers (10) in dem Datensatz, und
g) Aktivieren der mit dem beliebigen Geldwert oder geldwerten Guthaben beladenen Karte/n (12"), Wertschein/e, Gutschein/e oder dergleichen Coupon/s, wenn die Karte/n (12") gemäß Schritt e) beladen ist/sind, und/oder Beladen der Karte/n (12"), Wertschein/e, Gutschein/e oder dergleichen Coupon/s mit dem beliebigen Geldwert oder geldwerten Guthaben, wenn beim Vergleich der abgefragte Code (30'') auf dem Warenträger (10) und der Code (30") des Warenträgers (10) in dem Datensatz identisch sind oder zusammengehören,
h) Speichern der Aktivierung und/oder Beladung der Karte/n (12"), Wertschein/e, Gutschein/e oder dergleichen Coupon/s unter Zuordnen des/der Codes (30") der Karte/n (12") anhand des mindestens einen der dem Warenträger (10) zugeordneten Codes (30") in dem Datensatz,
i) Abfragen und Vergleichen des der/den Karte/n (12"), Wertschein/e, Gutschein/e oder dergleichen Coupon/s zugeordneten Codes (30'') auf der/den Karte/n (12") anhand des dem Warenträger (10) zugeordneten Codes (30") des Warenträgers (10) in dem Datensatz,
j) Freigeben der Karte/n (12"), Wertschein/e, Gutschein/e oder dergleichen Coupon/s nach Abfrage und Bestätigung der Aktivierung und/oder Beladung der Karte/n (12"), wenn der/die abgefragte/n Codes (30") der Karte/n (12'') und der Code (30") in dem Datensatz beim Vergleich einander zugeordnet bzw. zuordenbar sind oder zusammengehören,
wobei wenigstens einer der vorhergehenden Schritte, insbesondere einer der Schritte a) bis c) und e) bis j), durch oder mit ein/em elektronischen Speichermedium und/oder durch einen oder mit einem Computer, elektronischen Rechner oder dergleichen elektronischen Datenverarbeitungsvorrichtung durchgeführt wird

3. Verfahren nach Anspruch 1 oder 2, **dadurch gekennzeichnet, dass** die mindestens eine Karte (12, 12', 12") zusätzlich durch eine individuellen ersten Code (30, 30') oder individuellen Code (30") zugeordnete Nummer aus bereitgestellten Pools von Nummern personalisiert wird.

4. Verfahren nach einem der Ansprüche 1 bis 3, **dadurch gekennzeichnet, dass** der individuelle erste Code (30, 30') oder individuelle Code (30") der/den Karte/n (12, 12', 12") und/oder der individuelle zweite Code (40) dem Warenträger (10) analog oder digital zugeordnet wird/werden.

5. Verfahren nach einem der Ansprüche 1 bis 4, **dadurch gekennzeichnet, dass** der individuelle erste Code (30, 30') oder individuelle Code (30") mit der jeweiligen Karte (12, 12', 12'') unlösbar verbunden, insbesondere auf die jeweilige Karte (12, 12', 12"), vorzugsweise mittels diverser Personalisierungsverfahren, Klebstoff und/oder Druck, angeheftet, aufgebracht oder aufgetragen wird.

6. Verfahren nach einem der Ansprüche 1 bis 5, **dadurch gekennzeichnet, dass** die/mehrere/sämtliche Karte/n (12, 12', 12") in eine, insbesondere teilweise oder vollständig durchsichtige, Umverpackung (34) oder dergleichen Folie eingebracht wird/werden.

7. Verfahren nach einem der Ansprüche 1 bis 6, **dadurch gekennzeichnet, dass** die/mehrere/sämtliche Karte/n (12, 12', 12") in eine lebensmittelunbedenkliche Umverpackung (34) oder dergleichen Folie eingebracht wird/werden.

8. Verfahren nach einem der Ansprüche 1 bis 7, **dadurch gekennzeichnet, dass** die/mehrere/sämtliche Karte/n (12, 12', 12") in eine Umverpackung (34) oder dergleichen Folie mit einer Perforation (36) zwischen jeweils zueinander benachbarten bzw. gehörenden Karten (12, 12', 12") zur anschließenden Separierung von jeweils zueinander benachbarten Karten (12, 12', 12") eingebracht wird/werden.

9. Verfahren nach einem der Ansprüche 1 bis 8, **dadurch gekennzeichnet, dass** der individuelle zweite Code (40) der/den Karte/n (12, 12') oder einer Umverpackung oder dergleichen Folie der Karte/n (12, 12') oder einer gemeinsamen Umverpackung (34) oder dergleichen Folie mehrerer oder sämtlicher Karten lösbar zugeordnet wird.

10. Verfahren nach einem der Ansprüche 1 bis 9, **dadurch gekennzeichnet, dass** der individuelle zweite Code (40) an der/den Karte/n (12, 12') oder einer Umverpackung oder dergleichen Folie der Karte/n (12, 12') oder einer gemeinsamen Umverpackung (34) oder dergleichen Folie mehrerer oder sämtlicher Karten (12, 12') über ein Sandwich-Etikett (44) oder dergleichen Trägerelement, insbesondere mittels Klebstoff, lösbar befestigt wird.

11. Verfahren nach einem der Ansprüche 1 bis 10, **dadurch gekennzeichnet, dass** der individuelle zweite Code (40) der/den Karte/n (12, 12') oder einer Umverpackung (34) oder dergleichen Folie der Karte/n (12, 12') oder einer gemeinsamen Umverpackung (34) oder dergleichen Folie mehrerer oder sämtlicher Karten (12, 12') unlösbar zugeordnet wird.

12. Verfahren nach einem der Ansprüche 1 bis 11, **dadurch gekennzeichnet, dass** der individuelle zweite Code (40) mit der/den Karte/n (12, 12') oder einer Umverpackung oder dergleichen Folie der Karte/n (12, 12') oder einer gemeinsamen Umverpackung oder dergleichen Folie mehrerer oder sämtlicher Karten (12, 12') unlösbar verbunden, insbesondere auf der/den Karte/n (12, 12') oder einer Umverpackung oder dergleichen Folie der Karte/n (12, 12') oder einer gemeinsamen Umverpackung oder dergleichen Folie mehrerer oder sämtlicher Karten, vorzugsweise mittels Klebstoff und/oder Druck, in einem von einem Sichtfenster (58) des Warenträgers (10) freigegebenen Bereich von außen sichtbar angeheftet, aufgebracht oder aufgetragen wird.

13. Verfahren nach einem der Ansprüche 1 bis 12, **dadurch gekennzeichnet, dass** der Datensatz bestehend aus dem/ sämtlichen ersten Codes (30, 30') der Karte/n (12, 12') und dem zweiten Code (40) des Warenträgers (10) oder bestehend aus mindestens einem der Codes (30'') der Karte/n (12'') durch Scannen erfasst und generiert wird, und/oder dass der dem Warenträger (10) zugeordnete zweite Code (40) oder der mindestens eine der dem Warenträger (10) zugeordneten Codes (30") durch Scannen abgefragt wird, und/oder dass der der/den Karte/n (12, 12') zugeordnete erste Code (30, 30') oder Code (30'') auf der/den Karte/n (12, 12') durch Scannen abgefragt wird.

14. Verfahren nach einem der Ansprüche 1 bis 13, **dadurch gekennzeichnet, dass** der individuelle zweite Code (40) des Warenträgers (10) von der/den Karte/n (12, 12') oder einer Umverpackung oder dergleichen Folie der Karte/n (12, 12') oder einer gemeinsamen Umverpackung (34) oder dergleichen Folie mehrerer oder sämtlicher der Karten (12, 12') gelöst und dem Warenträger (10) zugeordnet, insbesondere auf den Warenträger (10), vorzugsweise mittels Klebstoff, angeheftet, aufgebracht oder aufgetragen wird.

15. Verfahren nach einem der Ansprüche 1 bis 14, **dadurch gekennzeichnet, dass** die Karte (12, 12') oder bei Vorhandensein von zwei oder mehreren Karten (12, 12') nach gegenseitiger Separierung, vorzugsweise durch eine Perforation (36), voneinander einzeln in den Warenträger (10) mit dem individuellen zweiten Code (40) eingebracht wird/werden.

16. Verfahren nach einem der Ansprüche 1 bis 15, **dadurch gekennzeichnet, dass** die Karte/n (12, 12') bei ordnungsgemäßem Erwerb des Warenträgers (10) durch entsprechenden Eintrag in dem generierten Datensatz anhand des/der dem Warenträger (10) mindestens einen zugeordneten individuellen ersten oder individuellen Codes (30, 30', 30") oder anhand des dem Warenträger (10) zugeordneten zweiten Codes (40) aktiviert und/oder mit dem beliebigen Geldwert oder geldwerten Guthaben beladen wird/werden.

17. Verfahren nach einem der Ansprüche 1 bis 16, **dadurch gekennzeichnet, dass** die Aktivierung und/oder Beladung der Karte/n (12, 12', 12") mit dem beliebigen Geldwert oder geldwerten Guthaben durch Scannen eingeleitet bzw. vorgenommen wird.

18. Verfahren nach einem der Ansprüche 1 bis 17, **dadurch gekennzeichnet, dass** der/das der/den Karte/n (12, 12', 12") beliebig zugewiesene Geldwert oder geldwerte Guthaben nach Identifizierung und/oder Aktivierung und/oder Beladung der Karte/n (12, 12', 12'') eingelöst und/oder verrechnet und bei fehlender Identifizierung und/oder Aktivierung und/oder Beladung der Karte/n (12, 12', 12") verweigert wird.

19. Verfahren nach einem der Ansprüche 1 bis 18, **dadurch gekennzeichnet, dass** bei versuchtem Einlösen und/oder Verrechnen des der/den Karte/n (12, 12', 12") beliebigen Geldwertes oder geldwerten Guthabens ohne Aktivierung und/oder Beladung der Karte/n (12, 12', 12'') ein Notruf oder eine Information generiert und zu einem privaten Sicherheitsdienst und/oder der Polizei gesendet wird.

20. Verfahren nach einem der Ansprüche 1 bis 19, **dadurch gekennzeichnet, dass** der individuelle erste oder individuelle Code (30, 30', 30'') und/oder der individuelle zweite Code (40) als eindimensionaler oder zweidimensionaler Code, insbesondere Barcode, ausgebildet wird/werden.

21. Warenträger, insbesondere zur Durchführung des Verfahrens nach einem der Ansprüche 1 bis 20, umfassend wenigstens eine/n Karte (12, 12', 12''), Wertschein, Gutschein oder dergleichen Coupon, welche/r in dem Warenträger (10) von außen nicht manipulierbar eingebracht ist, mit einem beliebigen Geldwert oder geldwerten Guthaben beladen oder beladbar ist, anhand mindestens eines der wenigstens einen Karte (12, 12', 12") zugeordneten individuellen ersten Codes (30, 30') oder individuellen Codes (30") oder anhand eines dem Warenträger (10) zugeordneten individuellen zweiten Codes (40) zugeordnet ist, diebstahlgesichert aktivierbar und/oder mit dem beliebigen Geldwert oder geldwerten Guthaben beladbar ist.

22. Warenträger nach Anspruch 21, **dadurch gekennzeichnet, dass** die wenigstens eine Karte (12, 12', 12") in den Warenträger (10) von außen nicht sichtbar oder vollständig oder teilweise sichtbar eingebracht ist.

23. Warenträger nach Anspruch 21 oder 22, **dadurch gekennzeichnet, dass** der Warenträger (10) neben der/dem wenigstens einen Karte (12, 12', 12''), Wertschein, Gutschein oder dergleichen Coupon mindestens eine Ware oder mehrere Waren gleicher oder unterschiedlicher Art, insbesondere Pralinen, anderes Konfekt oder Süßigkeiten, Spielwaren, Spielzeug, Kosmetika oder dergleichen umfasst.

24. Warenträger nach einem der Ansprüche 21 bis 23, **dadurch gekennzeichnet, dass** der Warenträger (10) eine Umverpackung umfasst, in welcher die wenigstens eine Karte (12, 12', 12'') ohne oder mit der mindestens einen Ware unmittelbar oder mittelbar über eine Sortiereinlage (16), eine Einlage zur Unterteilung, ein separates Fach oder ein gesondertes Aufnahmeelement, etwa als Teil der Sortiereinlage (16) oder als Tasche eines Deckels, mit oder ohne Polsterkissen zur Abstützung, eine beweg- oder verschwenkbare Trägermimik beim Betätigen des Warenträgers (10) aufklappt oder senkrecht (auf-)stellt (Pop-Up-Effekt), aufgenommen ist/sind.

25. Warenträger nach einem der Ansprüche 21 bis 24, **dadurch gekennzeichnet, dass** der Warenträger (10) als Ware selbst, Geschenkartikel oder Geschenkbox ausgebildet ist, in welcher die wenigstens eine Karte (12, 12', 12'') ohne oder mit der mindestens einen Ware unmittelbar oder mittelbar über eine Sortiereinlage (16), eine Einlage zur Unterteilung, ein separates Fach oder ein gesondertes Aufnahmeelement, etwa als Teil der Sortiereinlage (16) oder als Tasche eines Deckels, mit oder ohne Polsterkissen zur Abstützung, eine beweg- oder verschwenkbare Trägermimik beim Betätigen des Warenträgers (10) aufklappt oder senkrecht (auf-)stellt (Pop-Up-Effekt), aufgenommen ist/sind.

26. Warenträger nach einem der Ansprüche 21 bis 25, **dadurch gekennzeichnet, dass** der Warenträger (10) als Confiserieware, insbesondere als Präsentfigur aus Schokolade, Krokant oder (gefärbtem) Zuckerguss oder Mischungen daraus, ausgebildet ist, in welcher die wenigstens eine Karte (12, 12', 12") und/oder die mindestens eine Ware, insbesondere Pralinen, anderes Konfekt oder Süßigkeiten, Spielwaren, Spielzeug, Kosmetika oder dergleichen aufgenommen ist/sind.

27. Warenträger nach einem der Ansprüche 21 bis 26, **dadurch gekennzeichnet, dass** die Präsentfigur aus zwei Hälften gebildet ist, die miteinander einen Hohlraum einschließen.

28. Warenträger nach einem der Ansprüche 21 bis 27, **dadurch gekennzeichnet, dass** die Präsentfigur in einer an die Form der Präsentfigur angepasste Kunststoffeinlage aufgenommen ist.

29. Warenträger nach einem der Ansprüche 21 bis 28, **dadurch gekennzeichnet, dass** der Warenträger (10) eine Beigabe, etwa in Form von Blumen oder eines Blumenstraußes, umfasst, an welcher der Warenträger (10) befestigbar ist/sind.

30. Warenträger nach einem der Ansprüche 21 bis 29, **dadurch gekennzeichnet, dass** der Warenträger (10) eine symmetrische oder asymmetrische Form, eine dreidimensionale geometrische Form, insbesondere einer Kugel, eines Tetraeders, eines Rechtecks, eines Würfels, oder sonstigen Polygons, die Form eines Balles, insbesondere eines Fußballes oder Tennisballes, eines Mondes oder eines Sterns, eines Eies, eines Tieres, insbesondere eines Maikäfers, eines Marienkäfers, eines Hasen, eines Lamms, einer Kuh, einer Ente, eines Nikolaus oder eines Weihnachtsmanns, aufweist oder als Kalender, insbesondere Weihnachtskalender, ausgebildet ist.

31. Warenträger nach einem der Ansprüche 21 bis 30, **dadurch gekennzeichnet, dass** dem Warenträger (10) außenseitig ein individueller erster Code (30, 30') oder individueller Code (30'') oder ein individueller zweiter Code (40) zur Personalisierung und zum Abgleich personalisierter Elemente zugeordnet ist, welcher scannbar und welcher der/dem mit einem beliebigen Geldwert oder geldwerten Guthaben beladenen oder beladbaren Karte (12, 12', 12''), Wertschein, Gutschein oder dergleichen Coupon zugeordnet bzw. zuordenbar ist.

32. Warenträger nach einem der Ansprüche 21 bis 31, **dadurch gekennzeichnet, dass** dem Warenträger (10) an geeigneter Stelle ein erster individueller Code (30, 30') oder individueller Code (30'') oder ein individueller zweiter Code (40) zur Personalisierung und zum Abgleich personalisierter Elemente zugeordnet ist, welcher durch ein in der Umverpackung angeordnetes Sichtfenster (58) scannbar und welcher der/dem mit einem beliebigen Geldwert oder geldwerten Guthaben beladenen oder beladbaren Karte (12, 12', 12''), Wertschein, Gutschein oder dergleichen Coupon zugeordnet bzw. zuordenbar ist.

33. Warenträger nach einem der Ansprüche 21 bis 32, **dadurch gekennzeichnet, dass** der Warenträger (10) und/oder die Karte/n (12, 12', 12'') als Werbeträger, Werbeprodukt, Geschenkartikel, Geschenkbox oder sonstigen Eye-Catcher zur Anziehung und Steigerung der Aufmerksamkeit von Personen auf ein/an einem den Warenträger (10) ausgebenden Unternehmen ausgebildet ist.

34. Verwendung eines Warenträgers nach einem der Ansprüche 21 bis 33 als Werbeträger, Werbeprodukt, Geschenkartikel, Geschenkbox oder sonstigen Eye-Catcher zur Anziehung und Steigerung der Aufmerksamkeit von Personen auf ein/an einem den Warenträger (10) ausgebenden Unternehmen.
